# EUROPEAN PATENT APPLICATION

(11) **EP 1 873 995 A2**
(43) Date of publication of application: **02.01.2008**
(21) Application number: 07111166.0
(22) Date of filing: 27.06.2007
(51) Int. Cl.: H04L 29/06, H04L 12/56

(54) **Data transmission device, data reception device and data communication method**

(30) Priority: 28.06.2006 JP 2006177819
(71) Applicant: Fujitsu Ltd., Kawasaki-shi, Kanagawa 211-8588 (JP)
(72) Inventor: Furuya, Takehiro, Kawasaki-shi, Kanagawa 211-8588 (JP)
(74) Representative: Wilding, Frances Ward

(57) **Abstract**

A first PDU conversion unit converts a data string before conversion to a data string in a first data structure. A second PDU conversion unit converts a data string before conversion to a data string in a second data structure different from the first data structure. A selection unit selects one of the first PDU conversion unit and the second PDU conversion unit. A transmission unit transmits a data string obtained by the conversion by the unit selected by the selection unit, and an identification signal output from a transmission control unit as selection information indicating a selection result by the selection unit.

## Description

### Background of the Invention

### Field of the Invention

The present invention relates to data communication technology, and more specifically to the technology for improving data transfer efficiency.

### Description of the Related Art

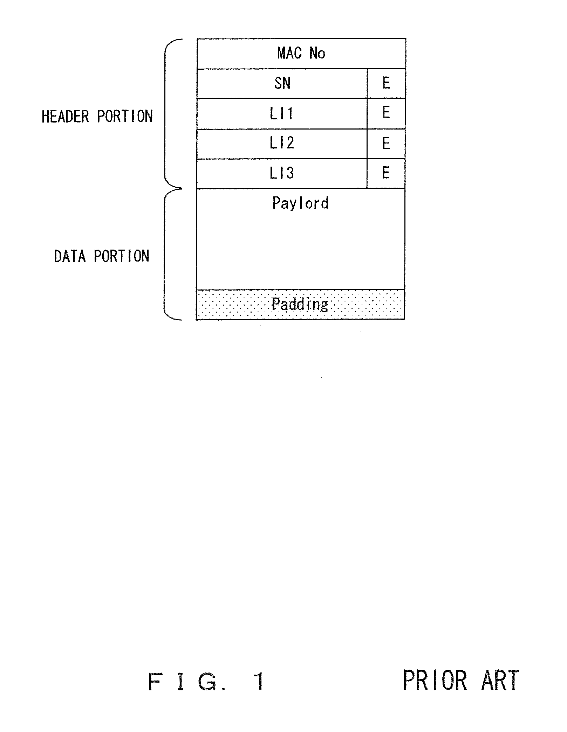

The data structure of a PDU (protocol data unit) as a data string with header information formed in the data communication over a communication network is determined for each communication protocol. FIG. 1 shows an example of the data structure of the PDU. The example of the data structure refers to the case in which a PDU conversion is performed for transmission of a MAC (medium access control) frame.

The data structure of the PDU shown in FIG. 1 has a header portion and a data portion. The header portion includes a total of five fields, that is, each of "MAC No" and "SN" fields and three "LI" fields. The header information included in the header portion is described below.

The "MAC No" field stores a MAC frame number. The MAC frame number identifies information for identification of the MAC frame to which the data string (payload data) carried on the data portion of the PDU belongs.

The "SN" field stores a sequence number. The sequence number refers to the order information about the arrangement order in the MAC frame designated by the MAC frame number and the like.

The "LI" field stores a length indicator. The length indicator is the information displayed when payload data about a plurality of MAC frames is arranged, and indicates the position of the boundary of the payload data in the data portion. In FIG. 1, three "LI" fields are shown, but the number of "LI" fields depends on the payload data stored in the data portion of the PDU, and there is also the case in which no "LI" field exists as described later.

The header information is also prepared such that a MAC frame can be regenerated by re-transmitting data although, for example, a PDU has been lost or damaged during the data transmission, or the order of the reception of PDUs has changed.

The "E" is an extension bit, and arranged as the trailing portion of the "SN" and "LI" fields. The extension bit indicates whether or not the immediately following field is the "LI" field. For example, when the bit is "1", the immediately following field is a "LI" field, and when the bit is "0", the immediately following field is not a "LI" field (it is a data portion). In the following description, the extension bit is omitted unless otherwise specified.

The data portion in the PDU shown in FIG. 1 is described as follows. That is, the "Payload" field appearing over a plurality of fields stores payload data as a MAC frame. The "Padding" portion stores dummy data when there is a room in the data portion in a PDU.

An example of PDU converting a MAC frame is described below using the data structure shown in FIG. 1.

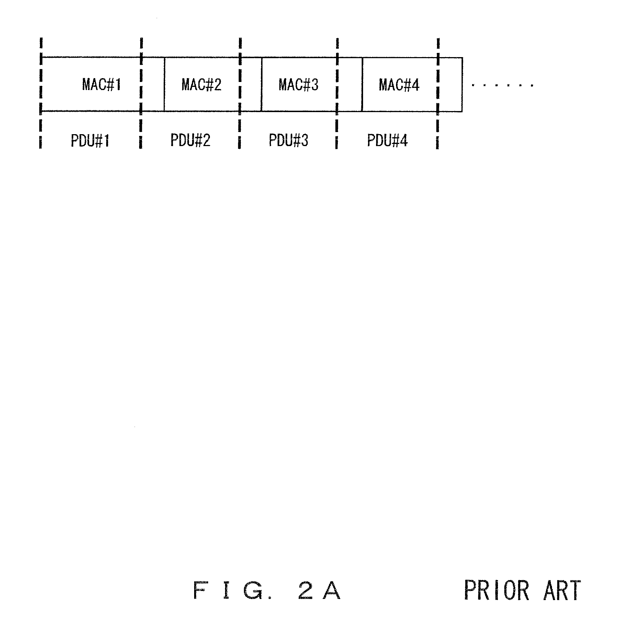

FIG. 2A shows the first example of MAC frames before conversion. The sequence of the MAC frames is represented by the MAC frame numbers, that is, "MAC#1", "MAC#2", "MAC#3", "MAC#4", ..., and it is assumed that the boundary of the payload data of a MAC frame is included in the PDU as a result of the PDU conversion.

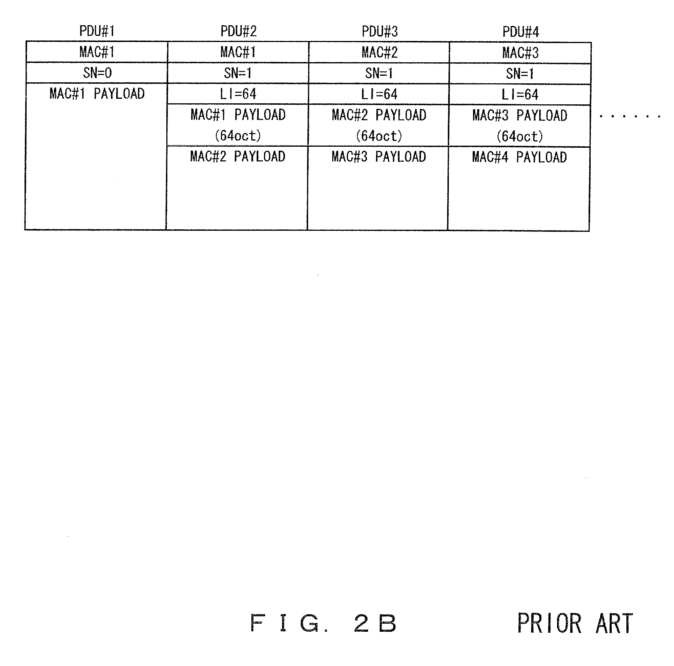

FIG. 2B shows a result of PDU converting of the MAC frame which shown in FIG. 2A. In FIG. 2B, first, PDU#1 is noted. The header portion of PDU#1 stores "MAC#1" as a MAC frame number, and stores "SN=0" indicating a leading portion as a sequence number. Therefore, it is clear that the data portion of PDU#1 stores the first half of the payload data in the MAC frame of "MAC#1".

Next, PDU#2 is noted. The header portion of PDU#2 stores "MAC#1" as a MAC frame number, and stores "SN=1" as a sequence number. It also stores "LI=64" as a length indicator. Therefore, in the data portion of PDU#2, the 64-octet area from the leading portion stores the second half portion in the payload data of the MAC frame of "MAC#1", and the subsequent areas store the first half portion of the payload data of the MAC frame of "MAC#2".

The processes for the subsequent PDU#3 and PDU#4 are the same as the process for PDU#2. That is, in the data portion of PDU#3, the 64-octet area from the head stores the last half portion of the payload data of the MAC frame of "MAC#2", and the subsequent areas store the first half portion of the payload data of the MAC frame of "MAC#3" according to the information in the header portion of PDU#3. In the data portion of PDU#4, the 64-octet area from the leading portion stores the second half portion of the payload data of the MAC frame of "MAC#3", and the subsequent areas store the first half of the payload data of the MAC frame of "MAC#4" according to the information in the header portion of PDU#4.

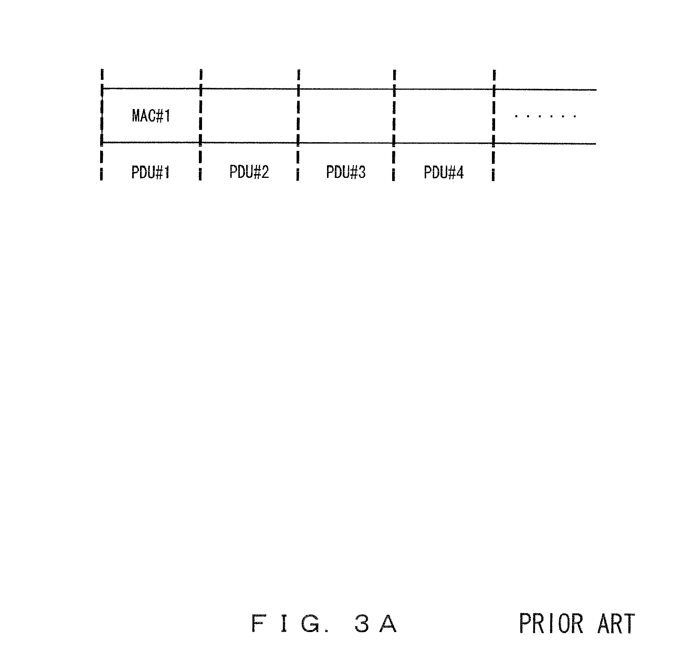

An example of PDU converting of the MAC frame shown in FIG. 3A is described below.

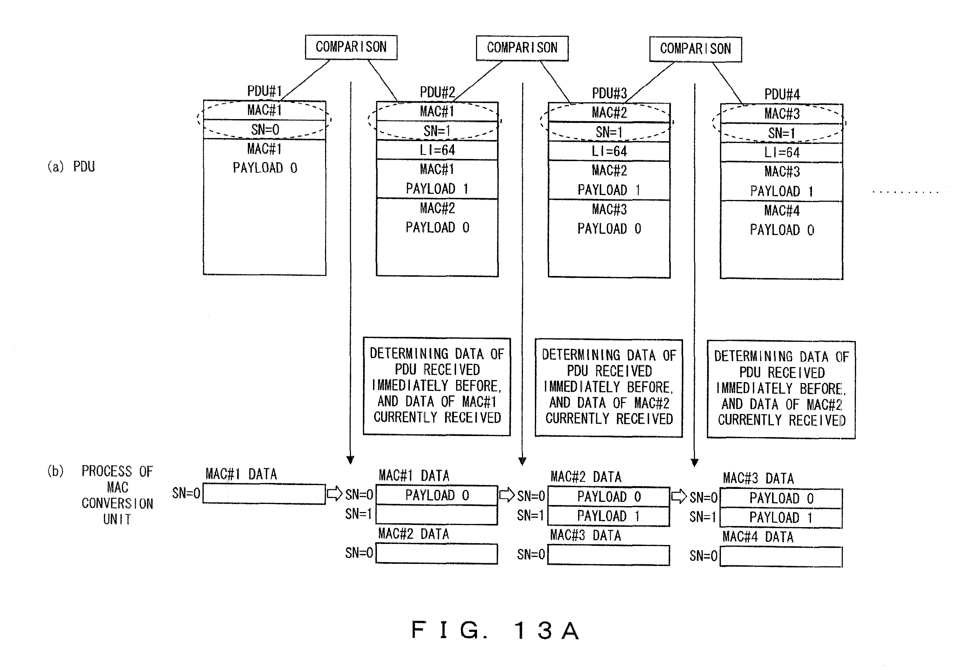

The second example of the MAC frame before conversion shown in FIG. 13A refers to a long frame having a frame length o "MAC#1" as a MAC frame number of each MAC frame. When the frame is PDU converted, the payload data of the MAC frame is included in a plurality of PDUs.

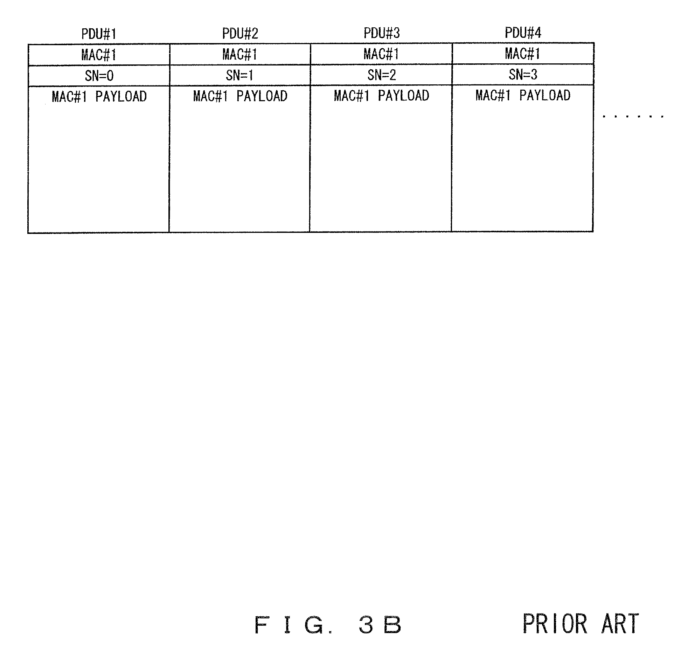

FIG. 3B shows a result of PDU converting of the MAC frame which shown in FIG. 3A. In FIG. 3B, first PDU#1 is noted. The header portion of PDU#1 stores "MAC#1" as a MAC frame number, and stores "SN=0" indicating a leading portion as a sequence number. Therefore, the data portion of PDU#1 stores the leading portion of the payload data of the MAC frame of "MAC#1".

Next, PDU#2 is noted. The header portion of PDU#2 stores "MAC#1" as a MAC frame number, and stores "SN=1" as a sequence number. However, unlike the case shown in FIG. 2B, the portion does not include a length indicator. Therefore, it is clear that the data portion of PDU#2 stores the subsequent portion following what is stored in the data portion of PDU#1.

The processes for the subsequent PDU#3 and PDU#4 are the same as the process for PDU#2. That is, it is determined according to the information in the header portion of PDU#3 that the data portion of PDU#3 stores the subsequent portion following what is stored in the data portion of PDU#2 in the payload data about the MAC frame of "MAC#1". It is also determined according to the information in the header portion of PDU#4 that the data portion of PDU#4 stores the subsequent portion following what is stored in the data portion of PDU#3 in the payload data about the MAC frame of "MAC#1".

Relating to the invention of the subject application, there is the technology of the Japanese Patent Application Publication No. 2005-198214 disclosed for improving the actual throughput in communications with other existing devices in a communication system for performing medium access control according to the carrier sense information between a physical layer and a MAC layer by removing the overhead required in transmitting a plurality of frames using an efficient frame format. The technology generates a physical frame having medium access control super-frame payload including a plurality of medium access control frames, sets the virtual carrier sense in the plurality of medium access control frames such that the same result of carrier sense can be obtained by the virtual carrier sense based on the plurality of medium access control frames in the medium access control super-frame payload with respect to the generated physical frame, and transmits the set physical frame to a destination communication device.

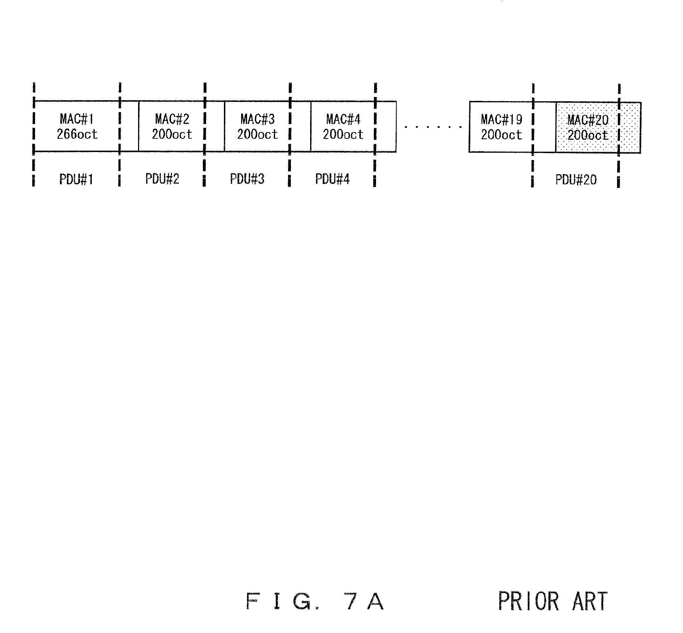

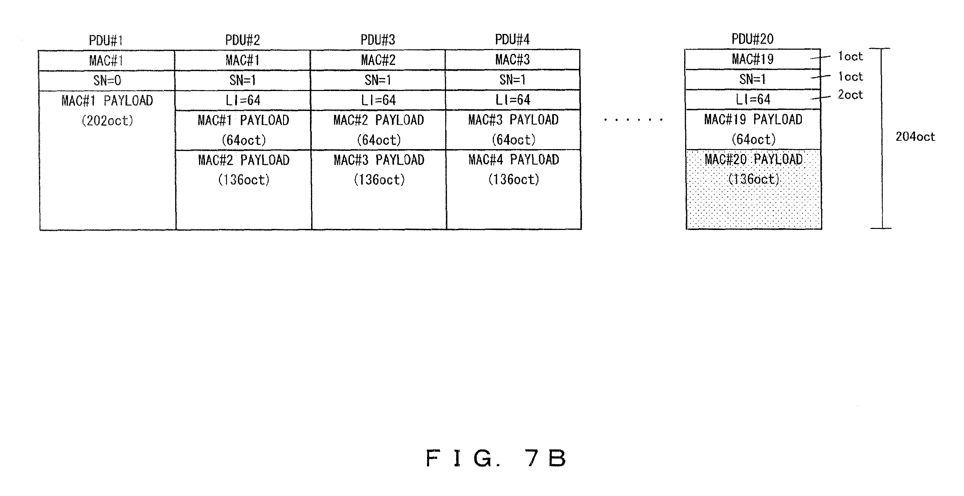

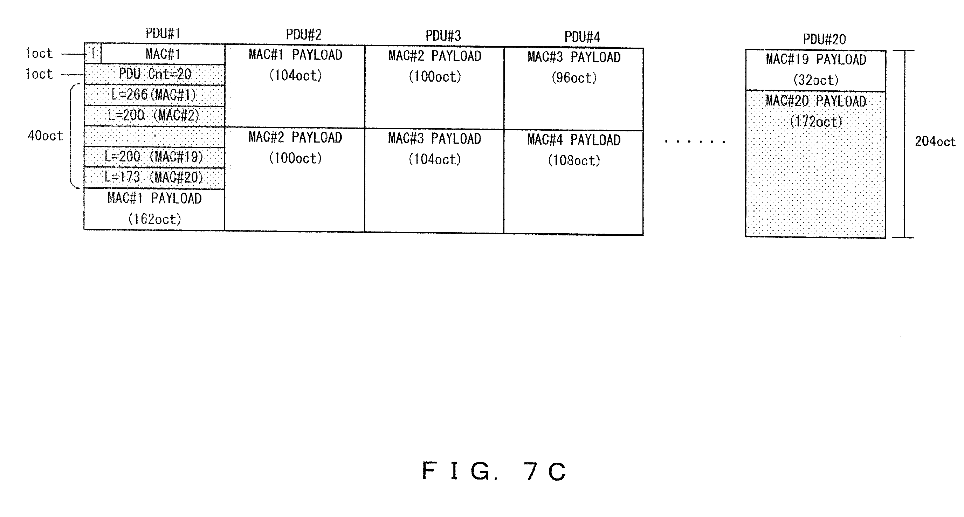

When the data to be transmitted is data such as streaming data, a UDP (user datagram protocol), changing a data reception order and restoring lost and damaged data by retransmitting data are not taken into account. Therefore, it is not always necessary to perform order management using a sequence number with respect to the header information about a PDU shown in FIG. 7.

### Summary of the Invention

Embodiments of the present invention aim at improving the data transfer efficiency.

The transmission device according to an embodiment of the present invention includes: a first data string conversion unit for converting a data string before conversion to a data string of a first data structure; a second data string conversion unit for converting the data string before conversion to a data string of a second data structure different from the first data structure; a selection unit for selecting one of the first data string conversion unit and the second data string conversion unit; and a transmission unit for transmitting the data string obtained by a conversion by what is selected by the selection unit, and selection information indicating a selection result by the selection unit.

With the configuration, the data string of the first data structure or the data string of the second data structure whichever is higher in data transfer efficiency can be selected. In addition, since the selection result is transmitted, the destination of the data string can designate the data structure of the data string. Therefore, the original data string before conversion can be regenerated.

In the above-mentioned transmission device according to embodiments of the present invention, the data string before conversion can configure one or more MAC (medium access control) frames.

In addition, in the transmission device according to embodiments of the present invention, the selection unit performs the selection according to the information, included in the data string before conversion about the characteristic of the data string.

With the configuration, the data string of the first data structure or the data string of the second data structure whichever is higher in data transfer efficiency can be selected on the basis of the characteristic of the data string before conversion.

In the transmission device according to embodiments of the present invention, the transmission unit can be configured such that the transmission unit can further transfer control information, provided with the selection information, about a data string to be transmitted.

Otherwise, in the transmission device according to embodiments of the present invention, the transmission unit can also be configured such that the data string provided with the selection information can be transmitted. At this time, the transmission unit can also be configured to transmit the selection information added to a specific position in the data string.

In the above-mentioned transmission device according to embodiments of the present invention, the transmission unit can also be configured to transmit a data string signal representing a data string transmitted by the transmission unit, and transmit a signal different from the data string signal as the selection information.

With the any of the above-mentioned configurations, the transmission unit transmits the selection information.

With the above-mentioned transmission device according to embodiments of the present invention, the second data string conversion unit can also be configured to include: a header information generation unit for generating header information including: identification information about a MAC frame assigned to the leading MAC frame in the data string before conversion; division number information about dividing a data string with header information, formed by adding the header information to the data string before conversion, from the leading portion for a predetermined data length ; and frame length information about each MAC frame configured by the data string before conversion ; a header information attached data string forming unit for forming the data string with header information by adding the header information to the data string before conversion; and a data string division unit for dividing the data string with header information for each data length from the leading portion.

With the configuration, the amount of transfer data increases, the delay occurring when a data string before conversion a data string before conversion at the destination is regenerated decreases, and a loss of appropriate data lost with an error occurring with data being transmitted can be reduced. As a result, the data transfer efficiency can be improved.

At this time, the transmission unit can also be configured to transmit the header information, added to the data string with header information, with the selection information added.

The reception device according to another embodiment of the present invention includes: a reception unit for receiving from a source a data string after conversion obtained by converting a data string before conversion to a data string of a predetermined data structure, and specific information for designation of the conversion performed to obtain the data string after conversion; and a data string inverse conversion unit for forming a data string before conversion by performing an inverse conversion on the data string after conversion according to the specific information.

With the configuration, a data string of a data structure having a high data transfer efficiency transmitted from the transmission device according to the present invention, and an original 1 data string before conversion, and the selection information are received, and an original data string before conversion can be regenerated.

In the reception device according to embodiments of the present invention, the data string before conversion can configure one or more MAC (medium access control) frames.

With the reception device according to embodiments of the present invention, the reception unit can also be configured to receive control information, about the data string after conversion transmitted from the source, provided with the specific information.

Otherwise, with the reception device according to embodiments of the present invention, the reception unit can also be configured to receive the data string after conversion provided with the specific information. At this time, the reception unit can also be configured to receive the specific information added to a specific position in the data string after conversion.

With the reception device according to embodiments of the present invention, the reception unit can also be configured to receive a data string signal representing the data string after conversion transmitted from the source, and a signal different from the after-conversion data string signal transmitted from the source as the specific information.

With any of the configurations, the specific information is received by a reception unit.

With the reception device according to embodiments of the present invention, the data string after conversion can be obtained by dividing the data string with header information formed by adding to the data string before conversion the header information including: identification information about a MAC frame assigned to the leading MAC frame in the data string before conversion; division number information about dividing a data string with header information, formed by adding the header information to the data string before conversion, from the leading portion for a predetermined data length; and frame length information about each MAC frame configured by the data string before conversion, from the leading portion for each predetermined data length.

The data string after conversion can reduce the delay occurring when the amount of transfer data increases and an original data string before conversion is regenerated from a data string transmitted from a source, and can suppress a loss of appropriate data lost when an error occurs during the transmission of data, thereby improving the data transfer efficiency.

At this time, the header information added to the data string with header information can also be provided with the specific information.

With the above-mentioned header information, a reception unit for receiving a data string can receive the specific information.

The communication method according to another embodiment of the present invention generates header information including data string identification information assigned to a leading data string in a data group formed by arranging one or more predetermined data strings, information about the number of divisions obtained when a data group with header information formed by adding header information to the data group is divided from a leading portion for each predetermined data length, and information about each data length of the data string, forms the data group with header information by adding the header information to the data group, generates a communication data string by dividing the data group with header information from the leading portion for each predetermined data length, and transmits the communication data string to a destination.

The above-mentioned configuration can reduce the delay occurring when the amount of transfer data increases and a data string before conversion is regenerated at a source, and can suppress a loss of appropriate data lost when an error occurs during the transmission of data, thereby improving the data transfer efficiency.

In the above-mentioned communication method according to embodiments of the present invention, the predetermined data string can also o configure a MAC (medium access control) frame.

Thus, data transfer efficiency can be improved by embodiments of the present invention.

In the above-mentioned communication method according to embodiments of the present invention, the predetermined data string can configure a MAC (medium access control) frame.

### Brief Description of the Drawings

The present invention will be more apparent from the following detailed description when the accompanying drawings are referenced.
FIG. 1 shows an example of the data structure of a PDU;
FIG. 2A shows the first example of a MAC frame before conversion;
FIG. 2B shows a result of PDU converting the MAC frame shown in FIG. 2A;
FIG. 3A shows the second example of a MAC frame before conversion;
FIG. 3B shows a result of PDU converting the MAC frame shown in FIG. 3A;
FIG. 4 shows the configuration of the communication system for embodying the present invention;
FIG. 5A shows the first data structure of a PDU;
FIG. 5B shows the second data structure of a PDU;
FIG. 6A shows an example (1) of the PDU obtained by converting a MAC frame;
FIG. 6B shows an example (2) of the PDU obtained by converting a MAC frame;
FIG. 7A shows the first example of a series of MAC frames before conversion;
FIG. 7B shows the data structure of a series of PDUs formed by converting a series of MAC frames shown in FIG. 7A by the first PDU conversion unit;
FIG. 7C shows the data structure of a series of PDUs formed by converting a series of frames shown in FIG. 7A by the second PDU conversion unit;
FIG. 8A shows the first example of a single MAC frame before conversion;
FIG. 8B shows the data structure of a series of PDUs formed by converting a single MAC frame shown in FIG. 8A by the first PDU conversion unit;
FIG. 8C shows the data structure of a series of PDUs formed by converting a single MAC frame shown in FIG. 8A by the second PDU conversion unit;
FIG. 9 shows the second example of a single MAC frame before conversion;
FIG. 10A shows the first example of reforming a MAC frame;
FIG. 10B shows the second example of reforming a MAC frame;
FIG. 11A shows the third example of reforming a MAC frame;
FIG. 11B shows the fourth example of reforming a MAC frame;
FIG. 12 shows the second example of a series of MAC frames before conversion;
FIG. 13A shows the fifth example of reforming a MAC frame;
FIG. 13B shows the sixth example of reforming a MAC frame;
FIG. 14A shows the seventh example of reforming a MAC frame;
FIG. 14B shows the eighth example of reforming a MAC frame;
FIG. 15 shows an example of the configuration of the second PDU conversion unit in the wireless transmission device shown in FIG. 4;
FIG. 16A shows an example of the data structure of a data channel;
FIG. 16B shows an example of the data structure of a control channel; and
FIG. 16C shows an example of an identification signal.

### Description of the Preferred Embodiments

The embodiments of the present invention are described below by referring to the attached drawings.

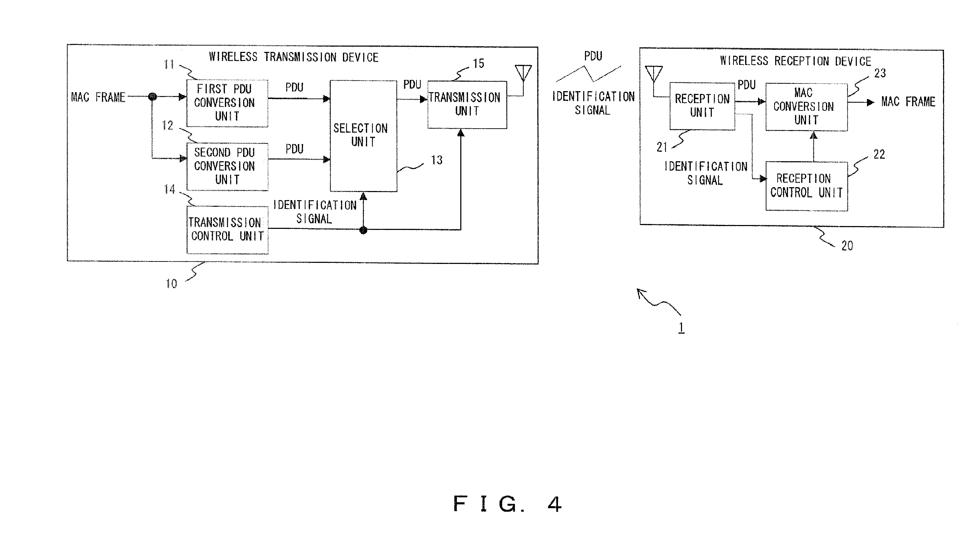

FIG. 4 is described first. FIG. 4 shows the configuration of the communication system for embodying the present invention.

A communication system 1 is configured by a wireless transmission device 10 and a wireless reception device 20. The wireless transmission device 10 performs PDU convert on a MAC frame as a data string to be transmitted, and transmits a data string after conversion to the wireless reception device 20 as a destination. The wireless reception device 20 receives a data string transmitted from the wireless transmission device 10 as a source, performs a inverse PDU conversion on the data string, and forms an original MAC frame.

The wireless transmission device 10 is configured by a first PDU conversion unit 11, a second PDU conversion unit 12, a selection unit 13, a transmission control unit 14, and a transmission unit 15.

The first PDU conversion unit 11 converts a MAC frame as a data string to be transmitted to a PDU of the first data structure and outputs the conversion result.

The second PDU conversion unit 12 converts the above-mentioned MAC frame to a PDU of the second data structure different from the first data structure and outputs the conversion result.

The selection unit 13 selects one of the first PDU conversion unit 11 and the second PDU conversion unit 12 according to the identification signal transmitted from the transmission control unit 14, and passes the PDU output from the selected unit to the transmission unit 15.

The transmission control unit 14 outputs the identification signal for control of the selection by the selection unit 13 to the selection unit 13, and outputs the identification signal to the transmission unit 15 as selection information about the selection result by the selection unit 13. The operation of the transmission control unit 14 is described later.

The transmission unit 15 modulates a high-frequency signal by the PDU received from the selection unit 13 and the identification signal output from the transmission control unit 14, and transmits the modulated high-frequency signal to the wireless reception device 20 through the wireless transmission line.

The wireless reception device 20 is configured by a reception unit 21, a reception control unit 22, and a MAC conversion unit 23.

The reception unit 21 receives a high-frequency signal transmitted from the wireless transmission device in and demodulates the PDU output by the selection unit 13 and the identification signal output by the transmission control unit 14.

The reception control unit 22 designates PDU conversion performed in the wireless transmission device 10 to obtain the PDU demodulated by the reception unit 21. That is, the identification signal is used as specific information for designation of the PDU conversion.

The MAC conversion unit 23 forms the original MAC frame before conversion and outputs it after performing the inverse PDU conversion designated by the reception control unit 22 on the PDU demodulated by the reception unit 21.

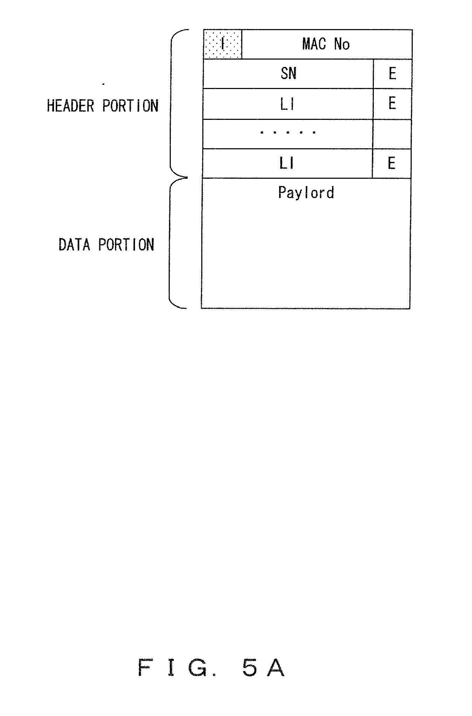

Next, FIG. 5A is described below. FIG. 5A shows the first data structure of a PDU. The data structure is applied to a PDU formed by converting a MAC frame by the first PDU conversion unit 11 shown in FIG. 4.

The data structure shown in FIG. 5A is the same as the data structure shown in FIG. 1 except an "I" bit is added to the leading portion of the "MAC No" field. The data portion of the PDU shown in FIG. 5A does not include a "Padding" portion because FIG. 5A shows the state in which the payload data is stored in all data portions.

An "I" bit refers to an identification bit (identifier). When the "I" bit is "0", the PDU is formed in the first data structure. When the "I" bit is "1", the PDU is formed in the second data structure.

In the conventional communication system to which a conventional example of the data structure of the PDU shown in FIG. 1 is applied, if the value of the "I" bit in the "MAC No" field is constantly set to "0", the communication system according to the present mode for embodying the present invention shown in FIG. 4 can provide high compatibility with the conventional communication system.

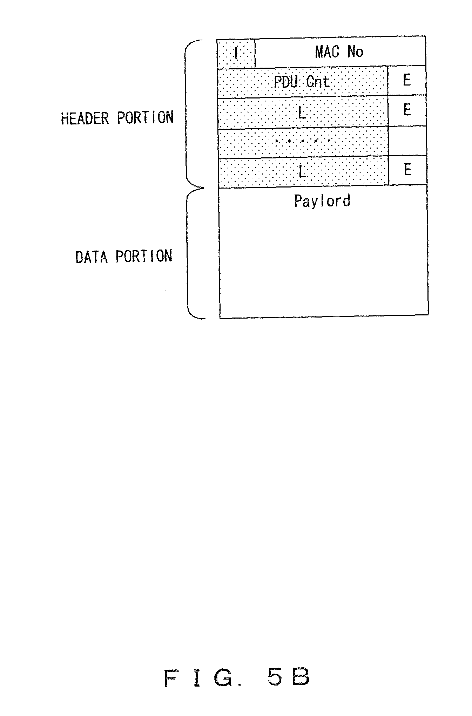

FIG. 5B is described below. FIG. 5B shows the second data structure of the PDU. The data structure is applied to the PDU formed by converting the MAC frame by the second PDU conversion unit 12 shown in FIG. 4.

The data structure of the PDU shown in FIG. 5B also includes the header portion and the data portion as with the structure shown in FIG. 5A. The header portion includes a "MAC No" field, a "PDU Cnt" field, and one or more "LI" fields.

In the header information, "MAC No" stores a MAC frame number as in FIG. 5A. The "I" bit added to the leading portion of the "MAC No" field is the same identification bit as shown in f 5A. Therefore, when the PDU is formed in the second data structure, the "I" bit is set to "1".

The "PDU Cnt" field stores a total number (PDU count) of a series of PDUs acquired by converting a single or a series of MAC frames.

Each of the "LI" fields stores information about the frame length of a corresponding MAC frame in the scope of the data portions of the number of PDUs indicated by the "PDU Cnt" field. The header portion of the PDU has "LI" fields corresponding to the number of frames of a single or a series of MAC frames before conversion.

"E" arranged at the trailing portion of the "PDU Cnt" field and the "LI" field is an extension bit. An extension bit indicates whether or not the subsequent field refers to an "LI" field, and is similar to the first data structure of the PDU. That is, for example, when the bit is "1", the immediately following field is "L". When the bit is "0", the immediately following field is not "L" (it is a data portion). In the following description, an extension bit is omitted unless otherwise specified.

The "Payload" field shown over a plurality of fields in the data portion of the PDU shown in FIG. 5B stores a payload data as a MAC frame as shown in FIG. 5A.

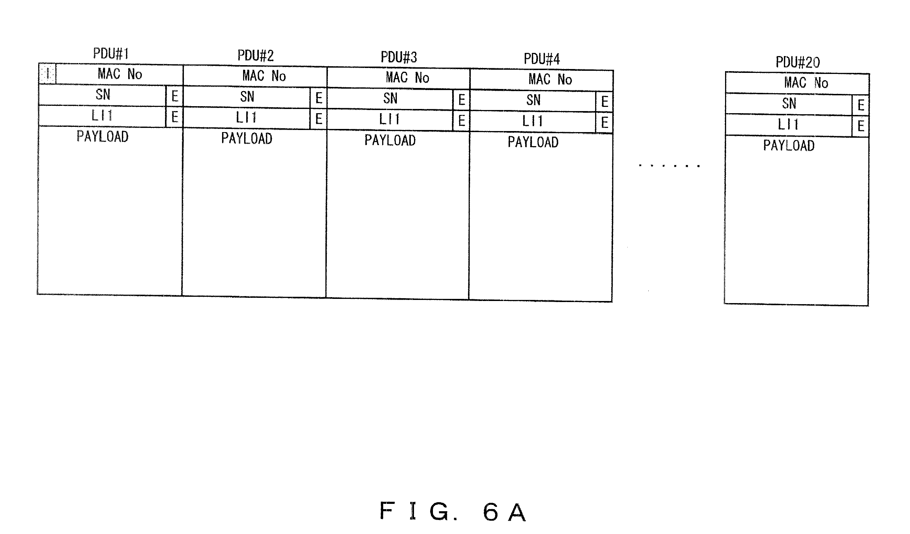

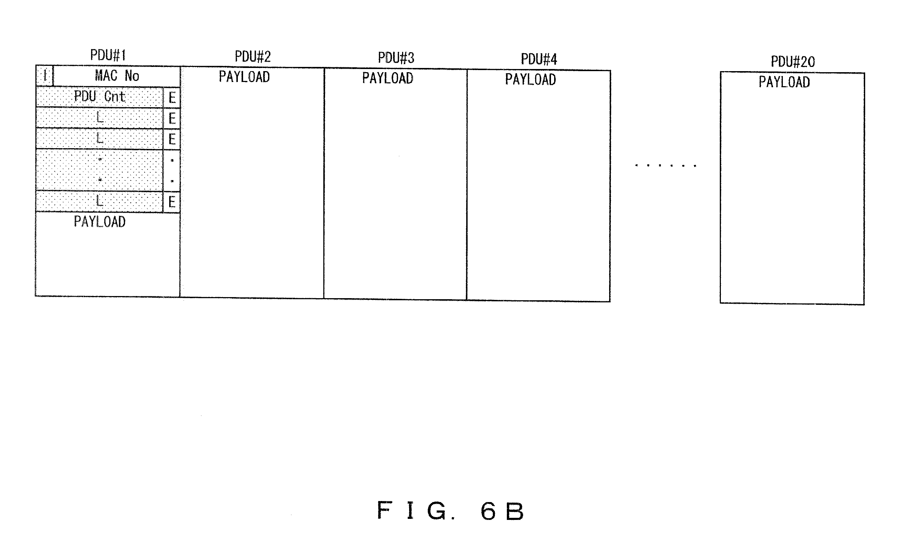

Next, FIGS. 6A and 6B are described. These figures show examples of the PDUs acquired by converting a MAC frame. FIG. 6A shows a result of conversion by the first PDU conversion unit 11, and FIG. 6B shows a result of conversion by the second PDU conversion unit 12. FIGS. 6A and 6B show the cases in which 20 PDUs are generated by conversion.

As clearly shown by the comparison between FIG. 6A and FIG. 6B, in the first data structure of the PDU shown in FIG. 6A, each PDU necessarily has a data portion. In the second data structure of the PDU shown in FIG. 6B, there is a header portion in PDU#1 as the leading portion of a series of PDUs, but there is no header portion in each of PDU#2 through PDU#20, and only the data portions exist. Thus, the difference is clearly indicated.

The features of the first data structure compared with the second data structure of PDUs are described below.

First, the conversion of a series of MAC frames shown in FIG. 7A by the first PDU conversion unit 11 and the second PDU conversion unit 12 is considered.

The sequence of the MAC frames shown in FIG. 7A is a series of 20 MAC frames. Each frame is assigned a MAC frame number of "MAC#1" to "MAC#20". The frame length of each MAC frame is 266 octet only for "MAC#1", and all the others are 200 octet.

FIG. 7B shows the data structure of the first through 20th PDUs in a series of PDUs formed by converting a series of MAC frames shown in FIG. 7A by the first PDU conversion unit 11. In the data structure (first data structure of a PDU) shown in FIG. 7B, the data size of one PDU is set to 204 octet, and the data size of each of the "MAC No" field and the "SN" field is 1 octet, and the data size of the "LI" field is set to 2 octet.

As shown in FIG. 7B, the data portion of PDU#20 in this case stores the second half portion of the payload data in the MAC frame of "MAC#19" and the payload data of up to 136 octet in the first half portion of the payload data in the MAC frame of "MAC#20".

FIG. 7C shows the data structure of the first through 20th PDUs in a series of PDUs formed by converting a series of MAC frames shown in FIG. 7A by the second PDU conversion unit 12.

In the data structure (second data structure of a PDU) shown in FIG. 7C, the data size of one PDU is set to 204 octet as in the case of the first data structure shown in FIG. 7B, and the data size of the "MAC No" field is set to 1 octet as in the case of the first data structure shown in FIG. 7B. Furthermore, the data size of the "PDU Cnt" field is set to 1 octet, and the data size of the "LI" field is set to 2 octet.

As shown in FIG. 7C, the data portion of PDU#20 in this case stores the second half portion of the payload data in the MAC frame of "MAC#19" and the payload data of up to 172 octet in the first half portion of the payload data in the MAC frame of "MAC#20". That is, as the PDUs of the same data size, the data portion of PDU#20 in the case where the second data structure shown in FIG. 7C is applied stores the payload data about the MAC frame of "MAC#20" for 36 octet more than the data portion of PDU#20 in the case where the first data structure shown in FIG. 7B is applied.

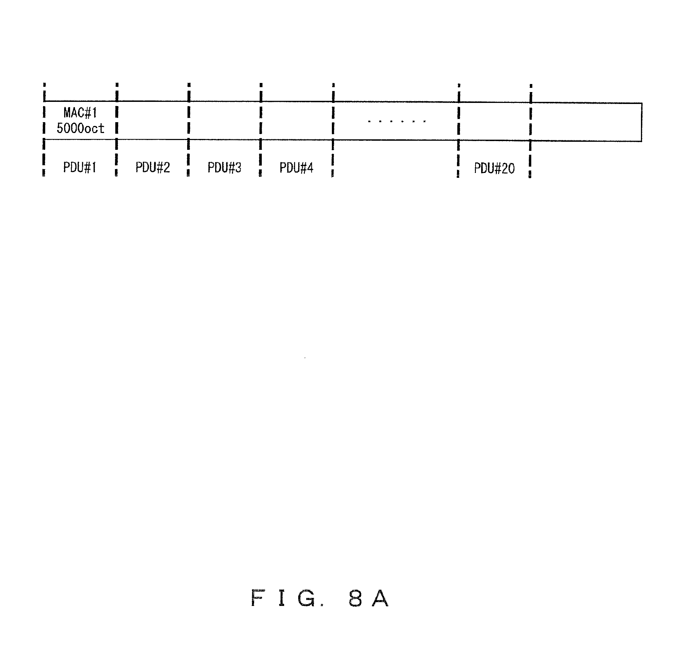

Next, consider the case where the first PDU conversion unit 11 and the second PDU conversion unit 12 convert the single MAC frame shown in FIG. 8A.

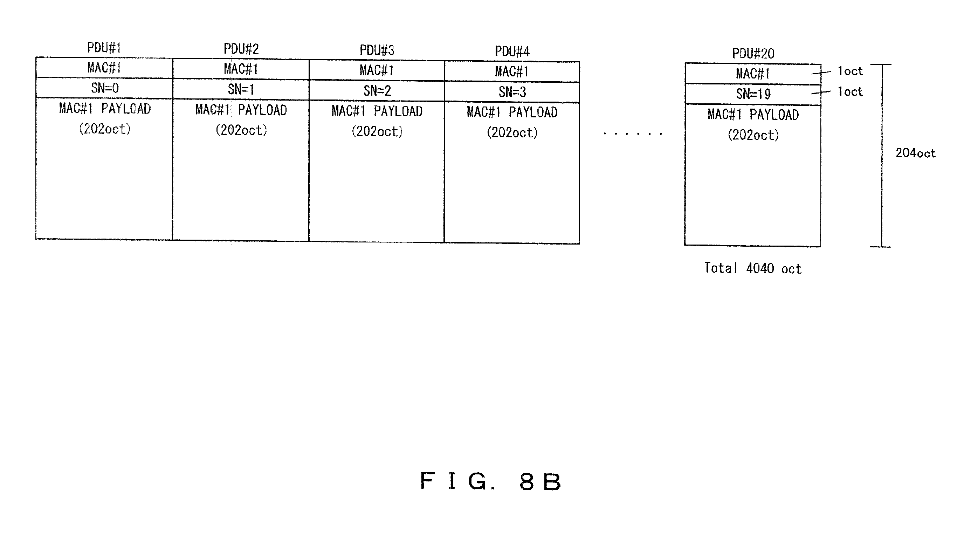

The MAC frame shown in FIG. 8B is assigned a "MAC#1" MAC frame number, and the frame length is 5000 octet.

FIG. 8B shows the data structure of the first through 20th PDUs in a series of PDUs formed by converting a series of MAC frames shown in FIG. 8A by the first PDU conversion unit 11 . In the data structure (first data structure of a PDU) shown in FIG. 8B, as in the case shown in FIG. 7B, the data size of one PDU is set to 204 octet, and the data size of each of the "MAC No" field and the "SN" field is 1 octet. When the first PDU conversion unit 11 PDU converts the single MAC frame as shown in FIG. 8A, the header portions of the first through 20th PDUs do not include the "LI" field.

As shown in FIG. 8B, the data portions of PDU#1 through PDU#20 in this case store the data of up to 4040 octet in the first half portions of the payload data in the MAC frame of "MAC#1".

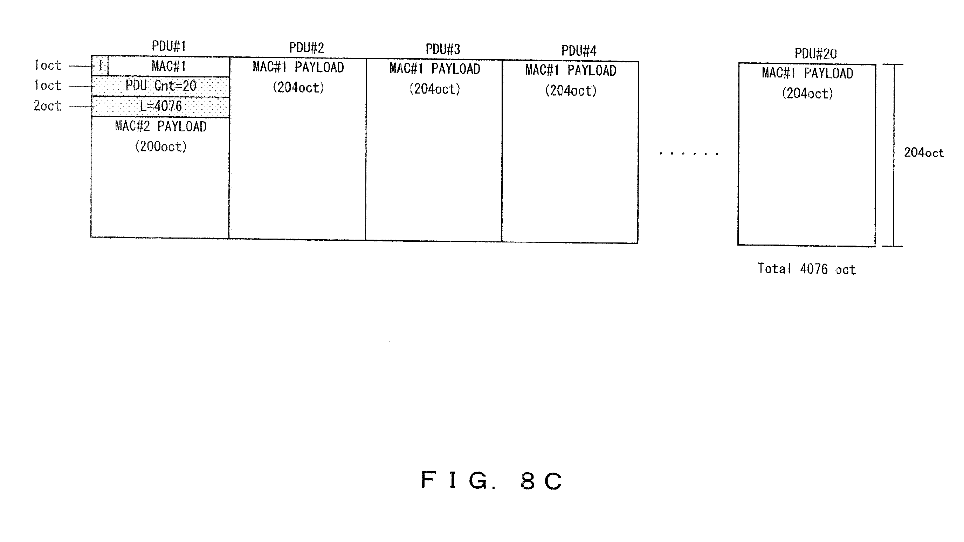

FIG. 8C shows the data structure of the first through 20th PDUs in a series of PDUs formed by converting the MAC frames shown in FIG. 8A by the second PDU conversion unit 12.

In the data structure (second data structure of a PDU) shown in FIG. 8C, the data size of one PDU is set to 204 octet as in the case shown in FIG. 8B, and the data size of the "MAC No" field is set to 1 octet as in the case of the first data structure shown in FIG. 8B. Furthermore, the data size of the "PDU Cnt" field is set to 1 octet, and the data size of the "LI" field is set to 2 octet.

As shown in FIG. 8C, the data portions of PDU#1 through PDU#20 in this case store the data of up to 4076 octet in the first half portions of the payload data in the MAC frame of "MAC#1". That is, as the PDUs of the same data size, in the second data structure of the PDU shown in FIG. 8C, the payload data about the MAC frame of "MAC#1" is stored for 36 octet more than the first data structure shown in FIG. 8B up to PDU#20.

As described above, in the second data structure of the PDU, the storage area for the "MAC No" field and the "SN" field of the header portion added to each PDU in the first data structure is used as a storage area of the payload data about the MAC frame. Accordingly, the amount of transfer data of the second data structure is larger than the amount of the first data structure.

In the communication system shown in FIG. 4, assuming that a part of the PDU has been destroyed (data error has occurred) during the transmission of data from the wireless transmission device 10 to the wireless reception device 20, the characteristics of the first data structure and the second data structure of PDUs are further described below.

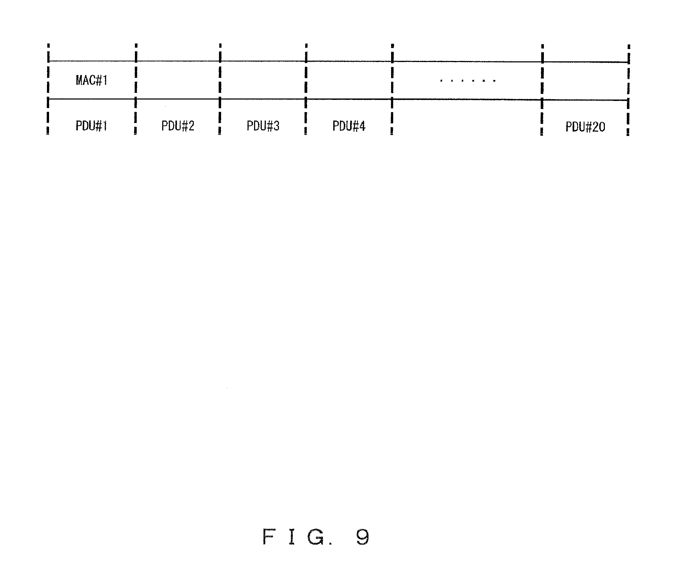

First, assume that a single MAC frame shown in FIG. 9 is converted by each of the first PDU conversion unit 11 and the second PDU conversion unit 12.

To the MAC frame shown in FIG. 9, the MAC frame number of "MAC#1" is assigned. Assume that the MAC frame is transmitted by dividing it into 20 PDUs.

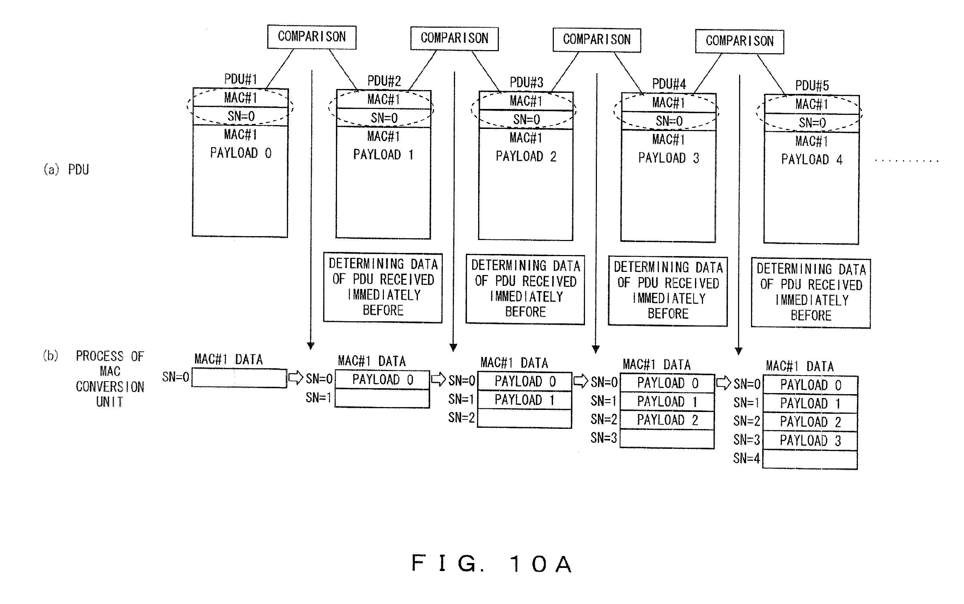

FIG. 10A shows the first example of the regeneration of the MAC frame performed by the MAC conversion unit 23 of the wireless reception device 20. The first example shows the case in which a series of PDUs formed by converting the MAC frame shown in FIG. 9 by the first PDU conversion unit 11 are appropriately received and demodulated by the wireless reception device 20.

In FIG. 10A, in (a) at the upper portion, the data contents of each PDU received from the reception unit 21 are shown in the reception order, that is, PDU#1, PDU#2, .... In (b) at the lower portion, the MAC conversion unit 23 regenerates the original MAC frame on the memory of the MAC conversion unit 23.

First, although the MAC conversion unit 23 receives PDU#1 first, it does not determine the data stored in the data portion of PDU#1 as the payload data about the MAC frame of MAC#1 at this time point.

Then, when the MAC conversion unit 23 receives PDU#2 after PDU#1, it compares the header portions of them. When it confirms that the MAC frame numbers ("MAC No" fields) of both header portions match each other, and PDU#2 refers to the PDU subsequent to PDU#1 according to the sequence number ("SN" fields) of PDU#2, the MAC conversion unit 23 determines that the PDU#1 received immediately before is appropriate. Then, it stores in memory the data "payload 0" stored in the data portion of PDU#1 as the data at the leading portion of the MAC frame of MAC#1.

Next, when the MAC conversion unit 23 receives PDU#3 after PDU#2, it compares the header portions of them. When it confirms that the MAC frame numbers of both header portions match each other, and PDU#3 refers to the PDU subsequent to PDU#2 according to the sequence number of PDU#3, the MAC conversion unit 23 determines that the PDU#2 received immediately before is appropriate. Then, it stores in the memory the data "payload 1" stored in the data portion of PDU#2 as the data of the MAC frame of MAC#1 subsequent to the above-mentioned "payload 0".

The operations of the 23 are similarly performed when it receives PDU#4 and subsequent PDUs. That is, when the MAC conversion unit 23 regenerates an original MAC frame from the PDU in the first data structure, it compares the header portions between the PDU and the PDU received immediately before each time it receives a new PDU, and determines on the basis of the comparison result whether or not the PDU received immediately before is appropriate. Therefore, in this case, it is not determined whether or not the current PDU is appropriate until the next PDU is received, and a delay occurs until the currently received PDU is determined.

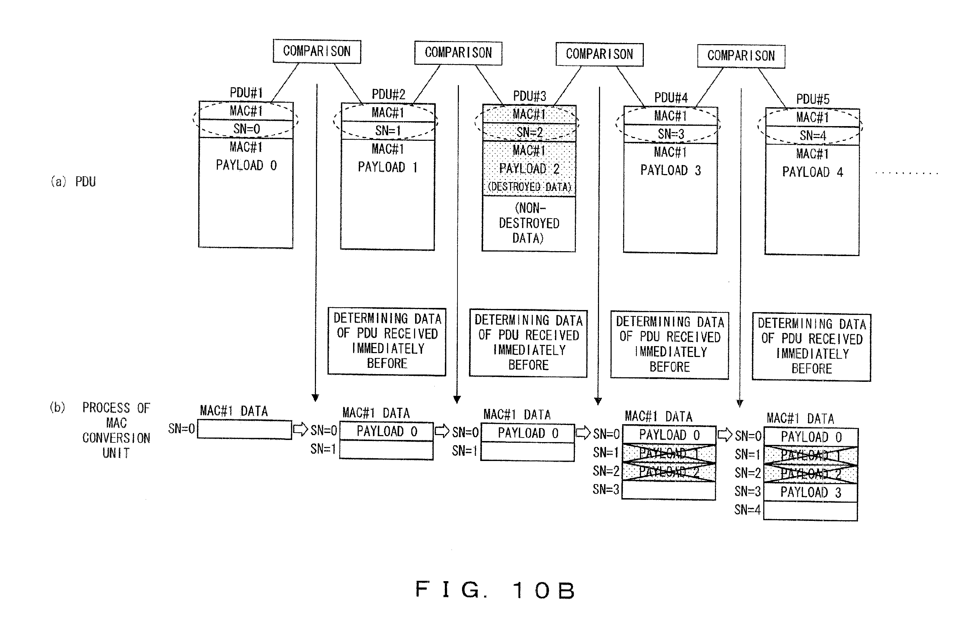

Next, FIG. 10B is described. FIG. 10B shows the second example of regenerating a MAC frame by the MAC conversion unit 23 of the wireless reception device 20. The second example shows the case in which a part of PDUs have been destroyed when the series of PDUs formed by converting the MAC frame shown in FIG. 9 by the first PDU conversion unit 11 are received by the wireless reception device 20 and demodulated.

In FIG. 10B, (a) at the upper portion shows the data contents of each PDU received from the reception unit 21 in the order of PDU#1, PDU#2, ..., in which the data of a part of PDU#3 (a part of the header portion and the data portion) have been destroyed. (b) at the lower portion shows the state in which the MAC conversion unit 23 regenerates the original MAC frame on the memory of the MAC conversion unit 23 depending on the acquisition of each PDU.

In FIG. 10B, the operations of the MAC conversion unit 23 performed when it sequentially receives PDU#1 and PDU#2 are the same as those shown in FIG. 10A.

When the MAC conversion unit 23 receives PDU#3 subsequent to PDU#2, it compares the header portions of them. Since the MAC frame numbers of their header portions do not match each other in this example, the MAC conversion unit 23 cannot determine that PDU#2 received immediately before is appropriate. That is, the MAC conversion unit 23 estimates that PDU#2 is not appropriate, and discards the data "payload 1" stored in the data portion of PDU#2 without storing it in the memory.

When the MAC conversion unit 23 receives PDU#4 subsequent to PDU#3, it compares the header portions of them. At this time, since the sequence number of PDU#3 is destroyed, it is not confirmed that PDU#4 is subsequent to PDU#3. In this case, the MAC conversion unit 23 estimates that PDU#3 is not appropriate, and discards the data "payload 2" stored in the data portion of PDU#3 without storing it in the memory. That is, at this time, the data of "SN=1" and "SN=2" in the MAC frame of MAC#1 is processed as lost. However, the MAC conversion unit 23 can recognize the MAC frame number ("MAC#1") of the header portion of PDU#4 and the sequence number ("SN=3") can be recognized.

Next, when the MAC conversion unit 23 receives PDU#5 after PDU#4, it compares the header portions of them. When it confirms that the MAC frame numbers of both header portions match each other, and PDU#5 refers to the PDU subsequent to PDU#4 according to the sequence number of PDU#5, the MAC conversion unit 23 determines that the PDU#4 received immediately before is appropriate. Then, it stores in the memory the data "payload 3" stored in the data portion of PDU#4 as the data of "SN=3" in the MAC frame of MAC#1.

Thus, when the MAC conversion unit 23 regenerates an original MAC frame from a PDU in the first data structure, the conversion unit 23 cannot confirm the previous PDU is appropriate until the subsequent PDU is received. Therefore, when the current PDU is destroyed, the PDU is processed as an invalid PDU, and the PDU received immediately before the destroyed PDU whose data is not destroyed is also processed as an invalid PDU. That is, when one PDU is destroyed, two PDUs are processed as destroyed PDUs.

When the original MAC data can be recovered by retransmission, the MAC conversion unit 23 can also configure the data of "SN=1" and "SN=2" in the MAC frame of MAC#1 to be recovered by the retransmission of PDU#2 and PDU#3 from the wireless transmission device 10. Accordingly, when the MAC data is transmitted, the first data structure of the PDU can also be usefully applied.

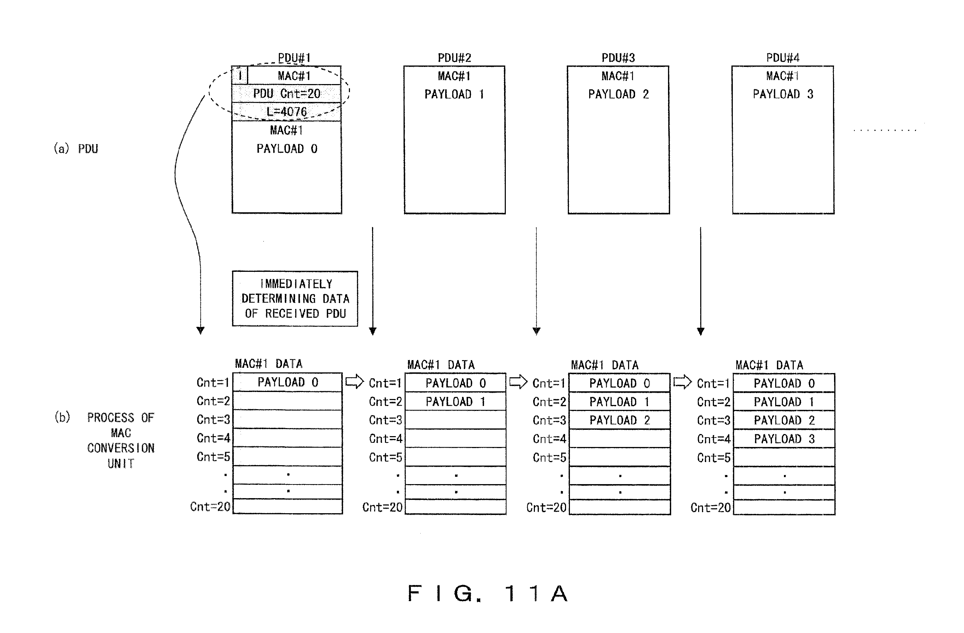

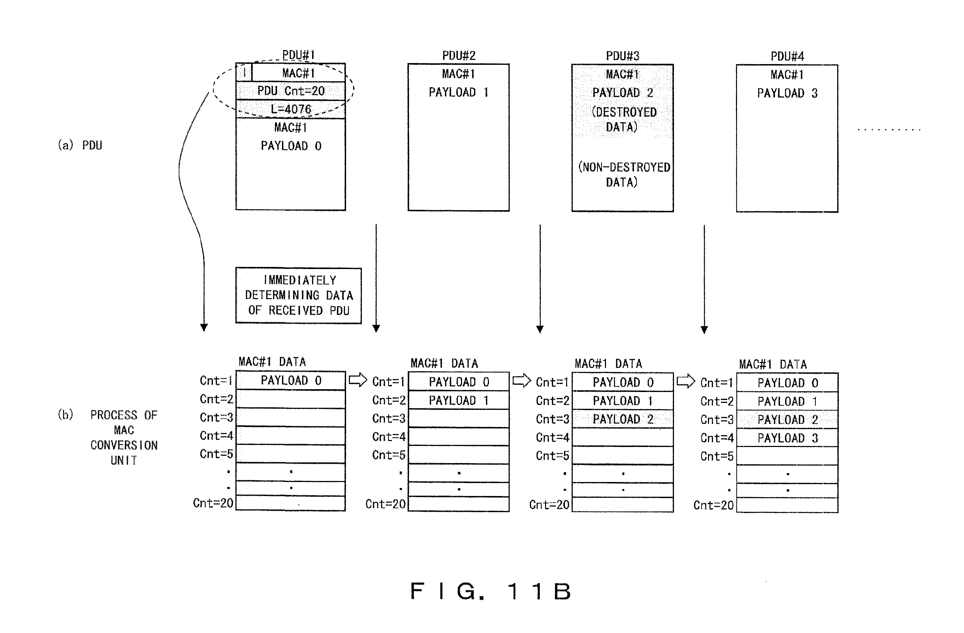

Next, FIG. 11A is described. FIG. 11A shows the third example of regenerating a MAC frame by the MAC conversion unit 23 of the wireless reception device 20. The third example shows the case in which a series of PDUs formed by converting the MAC frame shown in FIG. 9 by the second PDU conversion unit 12 are appropriately received by the wireless reception device 20 and demodulated.

In FIG. 11A, (a) at the upper portion shows the data contents of each PDU received from the reception unit 21 in the order of PDU#1, PDU#2, .... (b) at the lower portion shows the state in which the MAC conversion unit 23 regenerates the original MAC frame on the memory of the MAC conversion unit 23 depending on the acquisition of each PDU.

When the MAC conversion unit 23 first receives PDU#1, it reserves a necessary storage area in the memory to store the entire MAC frame of MAC#1 according to the header information stored in the header portion. That is, it reserves in the memory the necessary storage area for the MAC frame of the frame length indicated by the "L" field. Furthermore, the data "payload 0" stored in the data portion of PDU#1 is stored as the data at the leading portion of the MAC frame of MAC#1 at the leading portion of the storage area reserved in the memory.

In the second data structure of a PDU, the data size of each PDU of PDU#2 and subsequent PDUs is known. Therefore, the MAC conversion unit 23 can designate at this time the storage position when the payload data stored in each PDU is stored. Accordingly, when the MAC conversion unit 23 receives PDU#2 subsequent to PDU#1, it stores the data "payload 1" stored for the entire PDU#2 as the second half data in the MAC frame of MAC#1 in a predetermined position in the storage area reserved in the memory.

The operations of the MAC conversion unit 23 performed when it receives PDU#3 and subsequent PDUs are performed as in the case where it receives PDU#2. That is, when the MAC conversion unit 23 regenerates the original MAC frame from the PDU in the second data structure, it determines that the received PDU is appropriate upon receipt of the PDU, and stores it in a predetermined position in the storage area reserved in the memory. Therefore, the delay for determination of the PDU, which occurs when the original MAC frame is regenerated from the PDU in the first data structure, does not occur when the PDU in the second data structure is received.

Next, FIG. 11B is described. FIG. 11B shows the fourth example of regenerating a MAC frame by the MAC conversion unit 23 of the wireless reception device 20. The fourth example shows the case in which a part of PDUs have been destroyed when the series of PDUs formed by converting the MAC frame shown in FIG. 9 by the second PDU conversion unit 11 are received by the wireless reception device 20 and demodulated.

In FIG. 11B, (a) at the upper portion shows the data contents of each PDU received from the reception unit 21 in the order of PDU#1, PDU#2, ..., in which the data of a part of PDU#3 have been destroyed. (b) at the lower portion shows the state in which the MAC conversion unit 23 regenerates the original MAC frame on the memory of the MAC conversion unit 23 depending on the acquisition of each PDU.

In FIG. 11B, the operations of the MAC conversion unit 23 performed when it receives PDU#1 and PDU#2 in this order are the same as those in the case shown in FIG. 11A.

When the MAC conversion unit 23 receives PDU#3 subsequent to PDU#2, it stores the data "payload 2" stored over PDU#3 as the third data in the MAC frame of MAC#1 in a predetermined position in the storage area reserved in the memory. That is, although a part of the data of PDU#3 is destroyed, the MAC conversion unit 23 fetches the data as the third data in the MAC frame of MAC#1. Therefore, since a PDU whose data is not destroyed is not processed as an invalid PDU unlike the case in which an original MAC frame is regenerated from a PDU in the first data structure. As a result, when data is destroyed, a PDU in the second data structure causes a smaller amount of lost data than a PDU in the first data structure.

In the data transmission by the PDU in the second data structure, it is not easy to recover data from a damaged state by retransmission of data. However, when the data to be transmitted is data such as streaming data, UDP, etc., a PDU in the second data structure is effective in data transmission because the recovery from the damaged data by retransmission is not expected with the characteristic of the data taken into account.

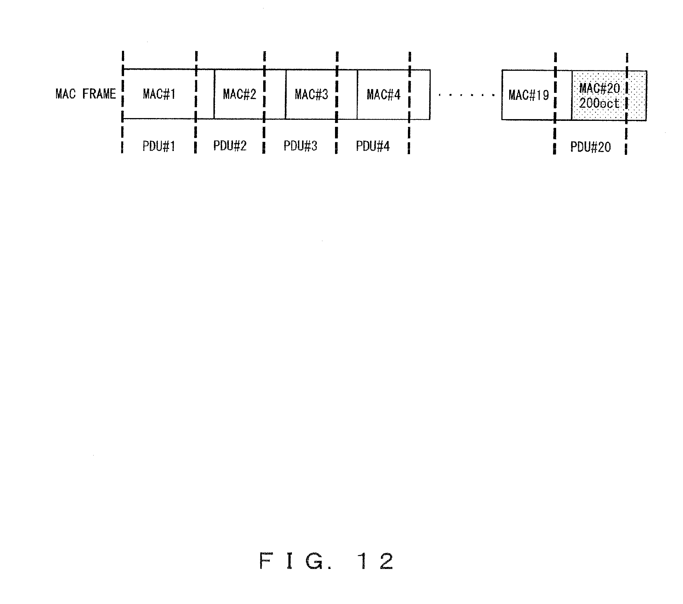

Next, consider the case in which a series of MAC frames shown in FIG. 12 are converted by the first PDU conversion unit 11 and the second PDU conversion unit 12.

The sequence of the MAC frames shown in FIG. 12 refers to a series of 20 MAC frames, and each frame is assigned a MAC frame number from "MAC#1" to "MAC#20". Assume that the series of MAC frames are divided into 20 PDUs and transmitted.

FIG. 13A shows the fifth example of regenerating a MAC frame by the MAC conversion unit 23 of the wireless reception device 20. The fifth example shows the case in which a series of PDUs formed by converting the series of MAC frames shown in FIG. 12 by the second PDU conversion unit 11 are appropriately received by the wireless reception device 20 and demodulated.

In FIG. 13A, (a) at the upper portion shows the data contents of each PDU received from the reception unit 21. in the order of PDU#1, PDU#2, .... (b) at the lower portion shows the state in which the MAC conversion unit 23 regenerates the original MAC frame on the memory of the MAC conversion unit 23 depending on the acquisition of each PDU.

Although the MAC conversion unit 23 first receives PDU#1, it does not determine at this time the data stored in the data portion of PDU#1 as the payload data of the MAC frame of MAC#1.

Next, when the MAC conversion unit 23 receives PDU#2 after PDU#1, it compares the header portions of them. When it confirms that PDU#2 refers to the PDU subsequent to PDU#1 according to the comparison result between the MAC frame numbers and between the sequence numbers, the MAC conversion unit 23 determines that the PDU#1 received immediately before is appropriate. Then, it stores in the memory the data "payload 0" stored in the data portion of PDU#1 as the data of the leading portion of the MAC frame of MAC#1. Furthermore, the MAC conversion unit 23 stores in the memory the data "payload 1" stored in the area (area of 64 octet from the leading portion in FIG. 13A) of the data portion indicated by the length indicator ("LI" field) of PDU#2 as the data of the MAC frame of MAC#1 subsequent to the "payload 0".

Then, the operations of the MAC conversion unit 23 performed when it receives PDU#3 are performed similarly. That is, when the MAC conversion unit 23 receives PDU#3 after PDU#2, it compares the header portions of them. When it confirms that PDU#3 refers to the PDU subsequent to PDU#2 according to the comparison result between the MAC frame numbers and between the sequence numbers, the MAC conversion unit 23 determines that the PDU#2 received immediately before is appropriate. Then, it stores in the memory the data "payload 0" stored in the second half of the data portion of PDU#2 as the data of the leading portion of the MAC frame of MAC#2. Furthermore, the MAC conversion unit 23 stores in the memory the data "payload 1" stored in the area (area of 64 octet from the leading portion in FIG. 13A) of the data portion indicated by the length indicator of PDU#3 as the data of the MAC frame of MAC#2 subsequent to the "payload 0".

The operations of the MAC conversion unit 23 performed when it receives PDU#4 and subsequent PDUs are similarly performed. That is, when the series of MAC frames shown in FIG. 12 are PDU converted and when the MAC conversion unit 23 regenerates the original MAC frame from the PDU in the first data structure, it compares the header portion of the PDU acquired immediately before with the header portion of a newly received PDU each time the new PDU is received, and determines whether or not the PDU acquired immediately before is appropriate on the basis of the comparison result. Therefore, in this case, it cannot be determined that the current PDU is appropriate until the subsequent PDU is received, and a delay occurs until the determination of a received PDU is made.

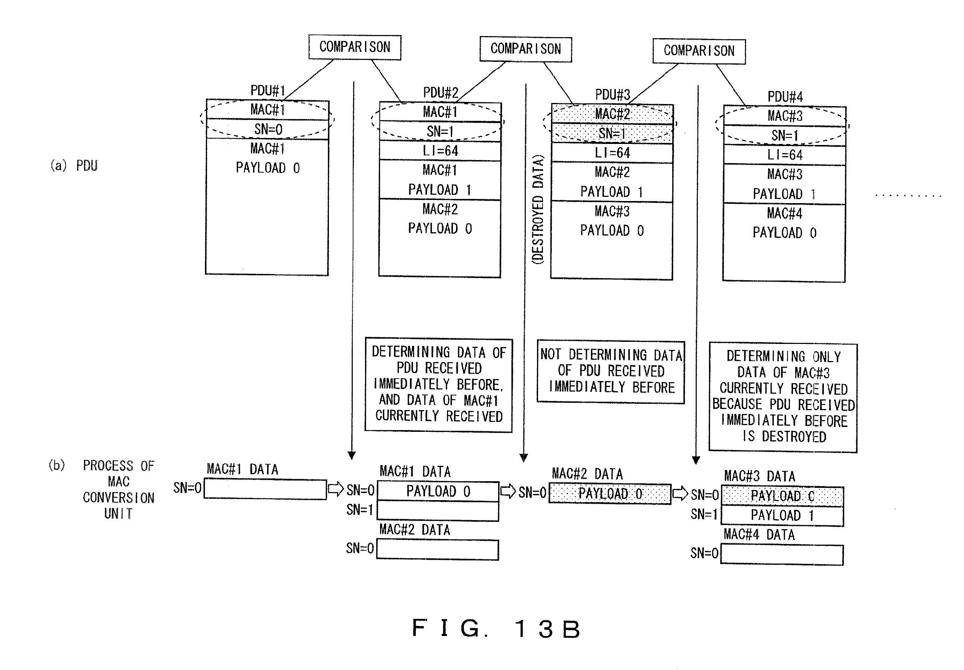

FIG. 13B is described below. FIG. 13B shows the sixth example of regenerating a MAC frame by the MAC conversion unit 23 of the wireless reception device 20. The sixth example shows the case in which a series of PDUs formed by converting the series of MAC frames shown in FIG. 12 by the first PDU conversion unit 11 are received by the wireless reception device 20 and demodulated, and a part of the PDUs are destroyed.

In FIG. 13B, (a) at the upper portion shows the data contents of each PDU received from the reception unit 21 in the order of PDU#1, PDU#2, ..., in which the data of a part of PDU#3 have been destroyed. (b) at the lower portion shows the state in which the MAC conversion unit 23 regenerates the original MAC frame on the memory of the MAC conversion unit 23 depending on the acquisition of each PDU.

The operations of the MAC conversion unit 23 performed when it receives PDU#1 and PDU#2 in this order are the same as those in the case shown in FIG. 13A.

When the MAC conversion unit 23 receives PDU#3 subsequent to PDU#2, it compares the header portions of them. Since the data of the header portion of PDU#3 is destroyed in this example, it cannot be determined that the PDU#3 is a PDU subsequent to PDU#2 by the comparison of the MAC frame numbers between them and the comparison of the sequence numbers. Therefore, the MAC conversion unit 23 cannot determine that PDU#2 received immediately before is appropriate. In this case, the MAC conversion unit 23 estimates that the data "payload 0" of the MAC frame of MAC#2 stored in the second half of the data portion of PDU#2 is not appropriate, and discards the data "payload 0" without storing it in the memory.

When the MAC conversion unit 23 receives PDU#4 subsequent to PDU#3, it compares the header portions of them. Since the data of the header portion of PDU#3 is destroyed in this example, it cannot be determined that the PDU#4 is a PDU subsequent to PDU#3 by the comparison of the MAC frame numbers between them and the comparison of the sequence numbers. Therefore, the MAC conversion unit 23 estimates that PDU#3 is not appropriate, and discards both the data "payload 1" of the MAC frame of MAC#2 stored in the data portion of PDU#3 and the data "payload 0" of the MAC frame of MAC#3 without storing them in the memory. That is, at this time, all data of the MAC frame of MAC#2 and the data of "SN=0" of the MAC frame of MAC#3 are processed as lost. However, since the MAC conversion unit 23 can recognize the MAC frame number ("MAC#3") of the header portion of PDU#4, and the sequence number ("SN=1"), it stores in the memory the data "payload 1'' stored in the area (64-octet area from the leading portion in the figure) of the data portion indicated by the length indicator of PDU#4 as the data of "SN=1" in the MAC frame of MAC#3.

Thus, when a series of MAC frames shown in FIG. 12 are PDU converted, the MAC conversion unit 23 cannot determine that the PDU immediately before is appropriate until the subsequent PDU is received when it regenerates the original MAC frame from the PDU in the first data structure. If the current PDU is destroyed, the PDU is processed as an invalid PDU, and the second half of the PDU that has been received immediately before and includes no destroyed data is also processed as an invalid portion. That is, when one PDU is destroyed, the second half of the PDU immediately before is also processed as an invalid portion.

When the original MAC data can be recovered from the damage of data by retransmission, the MAC conversion n unit 23 can configure the data of "SN=0" in the MAC frame of MAC#2 and the MAC frame of MAC#3 such that they can be recovered by the retransmission of PDU#2 and PDU#3 from the wireless transmission device 10. Therefore, when the transmission of the MAC data is performed, the first data structure of a PDU can also be useful.

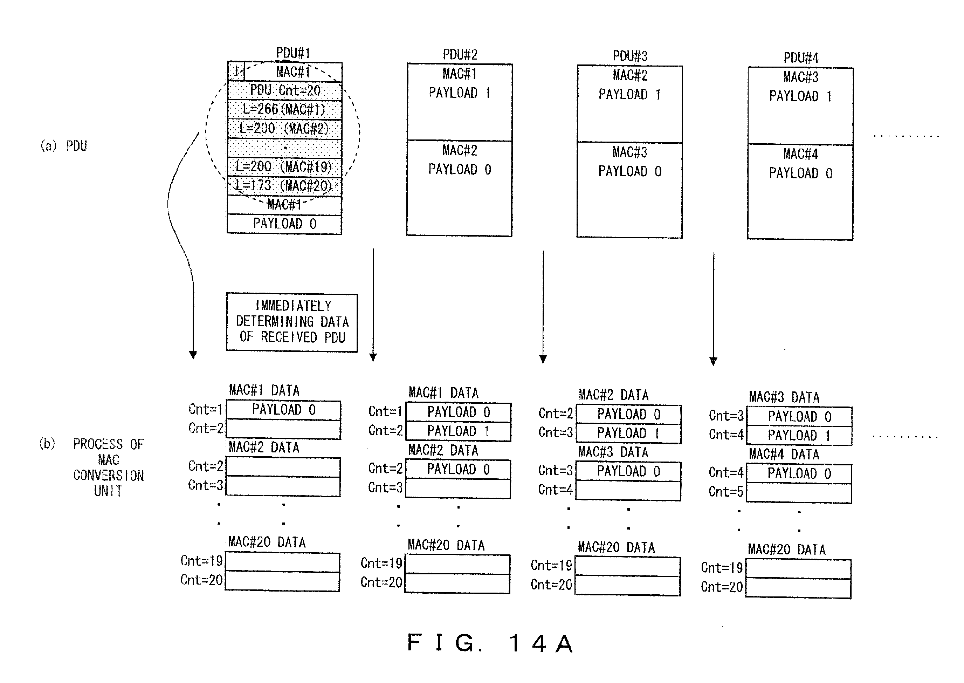

FIG. 14A is described below. FIG. 14A shows the seventh example of regenerating a MAC frame by the MAC conversion unit 23 of the wireless reception device 20. The seventh example shows the case in which a series of PDUs formed by converting the series of MAC frames shown in FIG. 12 by the second PDU conversion unit 12 are appropriately received by the wireless reception device 20 and demodulated.

In FIG. 14A, (a) at the upper portion shows the data contents of each PDU received from the reception unit 21 in the order of PDU#1, PDU#2, .... (b) at the lower portion shows the state in which the MAC conversion unit 23 regenerates the original MAC frame on the memory of the MAC conversion unit 23 depending on the acquisition of each PDU.

When the MAC conversion unit 23 first receives PDU#1, it reserves a necessary storage area in the memory to store the entire MAC frame from MAC#1 to MAC#20 according to the header information stored in the header portion. That is, it reserves in the memory for each MAC frame the necessary storage area for the MAC frame of the frame length indicated by the "L" field that is accepted corresponding to each MAC frame. Furthermore, the data "payload 0" stored in the data portion of PDU#1 is stored as the data at the leading portion of the MAC frame of MAC#1 at the leading portion of the storage area reserved in the memory.

In the second data structure of a PDU, the data size of each PDU of PDU#2 and subsequent PDUs is known. Therefore, the MAC conversion unit 23 can designate at this time the storage position when the payload data stored in each PDU is stored. Accordingly when the MAC conversion unit 23 receives PDU#2 subsequent to PDU#1, it stores the data "payload 1" stored in the first half of PDU#2 in a predetermined position in the storage area reserved in the memory as the second half data in the MAC frame of MAC#1. Furthermore, at this time, the MAC conversion unit 23 stores the data "payload 0" stored in the second half portion of PDU#1 at the leading portion of the storage area reserved in the memory as the first half data of the MAC frame of MAC#2.

The operations of the MAC conversion unit 23 performed when it receives PDU#3 and subsequent PDUs are performed as in the case where it receives PDU#2. That is, when the MAC conversion unit 23 performs PDU converts a series of MAC frames shown in FIG. 12 and regenerates the original MAC frame from the PDU in the second data structure, it determines that the received PDU is appropriate upon receipt of the PDU, and stores it in a predetermined position in the storage area reserved in the memory. Therefore, the delay for determination of the PDU, which occurs when the original MAC frame is regenerated from the PDU in the first data structure, does not occur when the PDU in the second data structure is received.

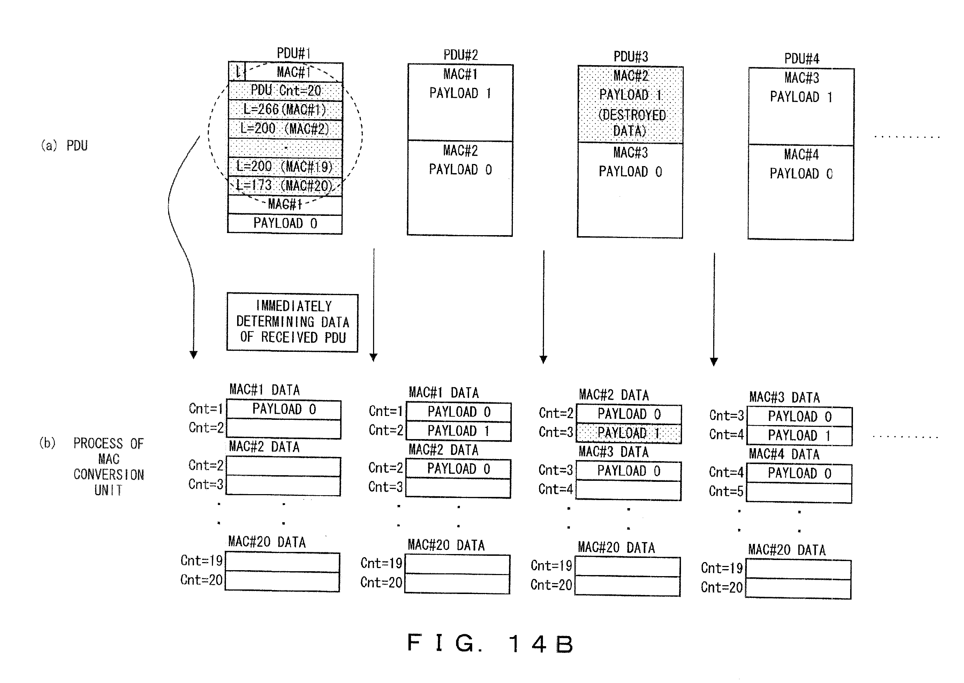

Next, FIG. 14B is described. FIG. 14B shows the eighth example of regenerating a MAC frame by the MAC conversion unit 23 of the wireless reception device 20. The eighth example shows the case in which a part of PDUs have been destroyed when the series of PDUs formed by converting a series of MAC frames shown in FIG. 9 by the second PDU conversion unit 11 are received by the wireless reception device 20 and demodulated.

In FIG. 14B, (a) at the upper portion shows the data contents of each PDU received from the reception unit 21 in the order of PDU#1, PDU#2, ..., in which the data (data of "payload 1" as the data of the second half portion in the MAC frame of MAC#2) of a part of PDU#3 have been destroyed. (b) at the lower portion shows the state in which the MAC conversion unit 23 regenerates the original MAC frame on the memory of the MAC conversion unit 23 depending on the acquisition of each PDU.

In FIG. 14B, the operations of the MAC conversion unit 23 performed when it receives PDU#1 and PDU#2 in this order are the same as those in the case shown in FIG. 14A.

When the MAC conversion unit 23 receives PDU#3 subsequent to PDU#2, it stores the data "payload 1" stored in the first half portion of PDU#3 as the data of the second half portion in the MAC frame of MAC#2 in a predetermined position in the storage area reserved in the memory. That is, although a part of the data of PDU#3 is destroyed, the MAC conversion unit 23 fetches the data as the data of the second half portion in the MAC frame of MAC#2. Therefore, since a PDU whose data is not destroyed is not processed as an invalid PDU unlike the case in which an original MAC frame is regenerated from a PDU in the first data structure. As a result, when data is destroyed, a PDU in the second data structure causes a smaller amount of lost data than a PDU in the first data structure.

In the data transmission by the PDU in the second data structure, it is not easy to recover data from a damaged state by retransmission of data. However, when the data to be transmitted is data such as streaming data, UDP, etc., a PDU in the second data structure is effective in data transmission because the recovery from the damaged data by retransmission is not expected with the characteristic of the data taken into account.

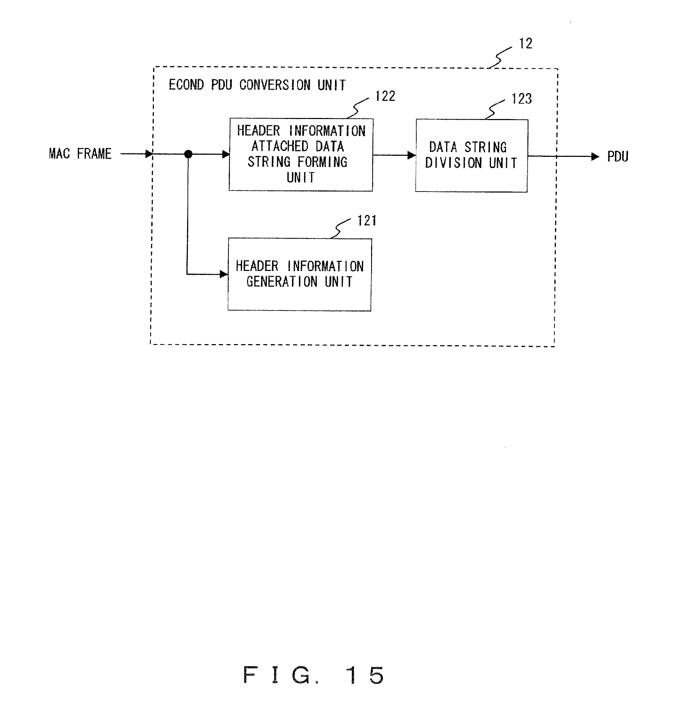

FIG. 15 is described below. FIG. 15 shows an example of the configuration of the second PDU conversion unit 12 in the wireless transmission device 10. The second PDU conversion unit 12 is configured by a header information generation unit 121, a header information attached data string forming unit 122, and a data string division unit 123.

The header information generation unit 121 generates header information.

The header information attached data string forming unit 122 generates a data string with header information by adding header information generated by the header information generation unit 121 to an input MAC frame (a single MAC frame or a series of MAC frames).

The data string division unit 123 generates a series of PDUs by dividing from the leading portion the data string with header information generated by the header information attached data string forming unit 122 for each predetermined data length.

The header information generated by the header information generation unit 121 is the information stored in each field of the "MAC No" field, "PDU Cnt" field, and "L" field in the data portion in the second data structure of a PDU shown in FIG. 5B. The header information generation unit 121 acquires the MAC frame number indicating the leading portion of the input MAC frame as identification information, and defines it as the information about the "MAC No" field, counts the value of the frame length of each input MAC frame, and defines it as the information about the "L" field, and defines the information about the number of divisions used when the MAC conversion unit 23 divides a data string with header information as the information about the "PDU Cnt" field. Thus, the header information is generated.

Next, the operations of the transmission control unit 14 in the wireless transmission device 10 in the communication system 1 are described below.

As described above, the transmission control unit 14 outputs to the selection unit 13 an identification signal for control of the selection by the selection unit 13. The transmission control unit 14 outputs to the selection unit 13 an identification signal corresponding to the information about the communication quality (QoS (quality of service)) indicated by the MAC frame before conversion by the first PDU conversion unit 11 and the second PDU conversion unit 12. That is, for example, when the QoS information indicated by the MAC frame before conversion is NRT (non-real-time), that is, when the MAC frame includes data not required to be in real time as the characteristic of the MAC frame, it outputs an identification signal for selection of the first PDU conversion unit 11 by the selection unit 13, thereby passing the PDU in the first data structure to the transmission unit 15. On the other hand, when the QoS information indicated by the MAC frame before conversion is RT (real time), that is, when the MAC frame includes data such as streaming data and the like strictly requiring the process in real time as the characteristic of the MAC frame, it output an identification signal for selection of the second PDU conversion unit 12 by the selection unit 13, thereby passing the PDU in the second data structure.

The identification signal output from the transmission control unit 14 is also transmitted to the transmission unit 15. When the identification signal indicates the selection of the first PDU conversion unit 11, the transmission unit 15 sets to "0" the identification bit ("I" bit) provided at a specific position (specific leading portion of the "MAC No" field in the header portion) in the PDU shown in FIGS. 5A and 5B, and sets the identification bit to "1" when the identification signal indicates the selection of the second PDU conversion unit 12. Then, it transmits the high-frequency signal modulated by the PDU in which the identification bit is set to the wireless reception device 20.

Instead of the transmission unit 15 setting the identification bit, the identification bit can be set according to the identification signal output from the transmission control unit 14 when the first PDU conversion unit 11 and the second PDU conversion unit 12 generate the header information about the PDU.

When the PDU in which the identification bit is set in the header portion is demodulated from the high-frequency signal, the reception unit 21 of the wireless reception device 20 generates the identification signal indicating the selection result corresponding to the identification bit, and outputs it to the reception control unit 22. Thus, the reception control unit 22 can designate the PDU conversion performed in the wireless transmission device 10 on the basis of the identification signal, and the MAC conversion unit 23 can form the original MAC frame before conversion and output it by performing an inverse PDU conversion specified by the reception control unit 22 on the PDU demodulated by the reception unit 21.

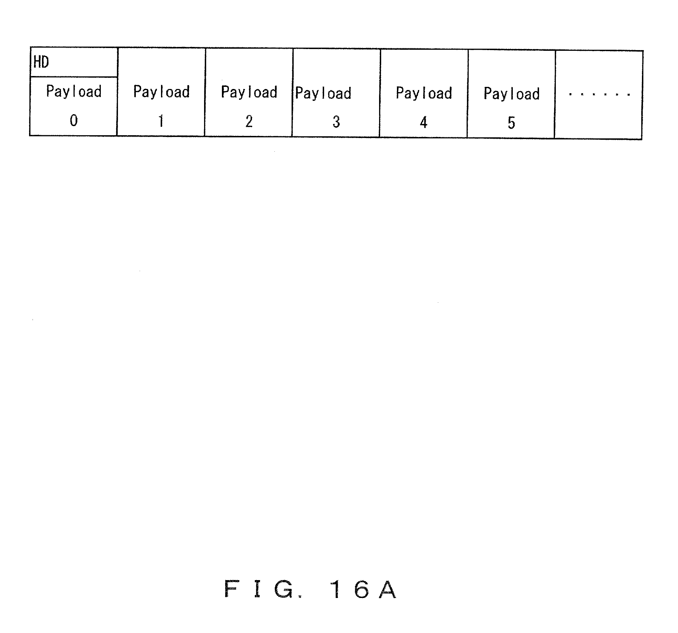

In the above-mentioned example, the reception control unit 22 of the wireless reception device 20 designates the PDU conversion by the transmission unit 15 transmitting the PDU provided with selection information indicating the selection result of the selection unit 13. Instead, a data string including control information about the PDUs shown in FIG. 13B (hereinafter referred to as a "control channel") can be used in addition to a series of PDUs (hereinafter referred to as a "data channel") obtained by converting the data string (MAC frame) to be transmitted by the first PDU conversion unit 11 or the second PDU conversion unit 12 as shown in FIG. 16A.

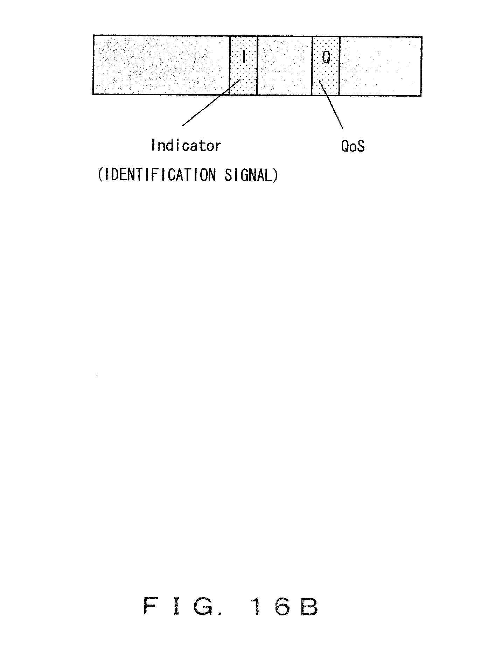

As shown in FIG. 16B, an identification bit ("I" bit) is defined in the data string of the control channel. When the identification signal output from the transmission control unit 14 indicates the selection of the first PDU conversion unit 11, the transmission unit 15 sets the identification bit to "0". When the identification signal indicates the selection of the second PDU conversion unit 12, the transmission unit 15 sets the identification bit to "1". Then, it transmits the high-frequency signal modulated by the above-mentioned data channel and the control channel to the wireless reception device 20.

The reception unit 21 of the wireless reception device 20 demodulates the control channel together with the data channel according to the received high-frequency signal, generates an identification signal indicating a selection result corresponding to the identification bit of the demodulated control channel, and outputs it to the reception control, unit 22. Thus, the reception control unit 22 can designate the PDU conversion performed in the wireless transmission device 10 according to the identification signal, and the MAC conversion unit 23 can generate and output the original MAC frame before conversion by performing the inverse PDU conversion specified by the reception control unit 22 on the PDU demodulated by the reception unit 21.

As shown in FIG. 16B, if the QoS information has already been included in the control channel, an identification bit ("I" bit) is defined in the data string of the control channel, the transmission unit 15 does not set an identification bit, and the QoS information can be directly used. That is, the reception unit 21 of the wireless reception device 20 demodulates the control channel together with the data channel according to the received high-frequency signal. Then, it generates the same identification signal as the signal output by the transmission control unit 14 to the selection unit 13 corresponding to the QoS information about the demodulated control channel, and outputs it to the reception control unit 22. Thus, the reception control unit 22 can designate the PDU conversion performed in the wireless transmission device 10 according to the identification signal, and the MAC conversion unit 23 can generate and output the original MAC frame before conversion by performing the inverse PDU conversion specified by the reception control unit 22 on the PDU demodulated by the reception unit 21.

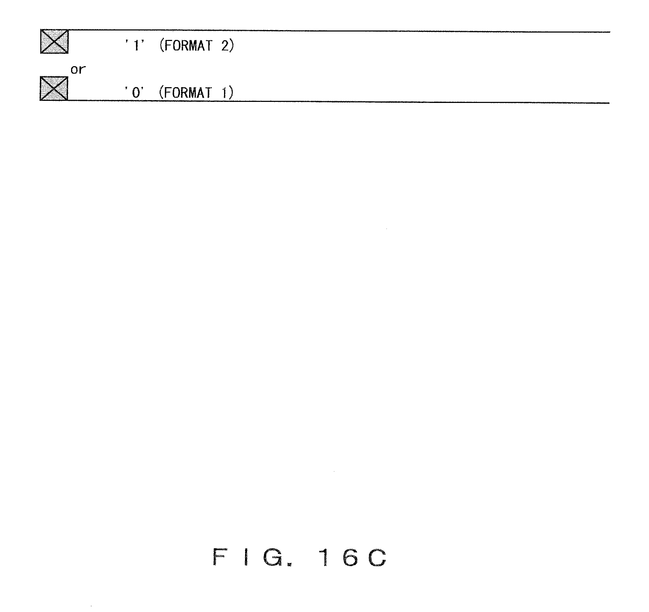

Instead of the above-mentioned method, the transmission unit 15 can transmit a high-frequency signal, which is different from the high-frequency signal modulated by the PDU, together with the PDU-modulated high-frequency signal as the selection about the selection result by the selection unit 13. That is, as shown in FIG. 16C, when the identification signal output from the transmission control unit 14 indicates the selection of the first PDU conversion unit 11, the transmission unit 15 does not transmit the high-frequency signal different from the PDU-modulated high-frequency signal, and when the identification signal indicates the selection of the second PDU conversion unit 12, it transmits the high-frequency signal different from the PDU-modulated high-frequency signal.

When the high-frequency signal different from the PDU-modulated high-frequency signal is received, the reception unit 21 of the wireless reception device 20 generates an identification signal indicating the selection of the second PDU conversion unit 12 and outputs it to the reception control unit 22. When the high-frequency signal different from the PDU-modulated high-frequency signal is not received, it generates an identification signal indicating the selection of the first PDU conversion unit 11, and outputs it to the reception control unit 22. Thus, the reception control unit 22 can designate the PDU conversion performed in the wireless transmission device 10 according to the identification signal, and the MAC conversion unit 23 can generate and output the original MAC frame before conversion by performing the inverse PDU conversion specified by the reception control unit 22 on the PDU demodulated by the reception unit 21.

The mode for embodying the present invention is described above, but the present invention is not limited to the mode described above, and can be improved and modified in various methods within the gist of the present invention.

For example, with the configuration shown in FIG. 4, the selection unit 13 is configured to select one of the first PDU conversion unit 11 and the second PDU conversion unit 12, and pass the PDU output by the selected unit. Instead, the selection unit 13 can be configured to select one of the first PDU conversion unit 11 and the second PDU conversion unit 12 so that the selected unit between the first PDU conversion unit 11 and the second PDU conversion unit 12 is operated to output a PDU to the transmission unit 15.

In the above-mentioned mode for embodying the present invention, the transmission control unit 14 is configured to output to the selection unit 13 an identification signal corresponding to the QoS information indicated by the MAC frame before conversion in the first PDU conversion unit 11 and the second PDU conversion unit 12. Instead, depending on the type of data to be transmitted, for example, when the data to be transmitted is streaming data and the UDP data, an identification signal for selection of the second PDU conversion unit 12 by the selection unit 13 can be output, and when the data to be transmitted is other data, an identification signal for selection of the first PDU conversion unit 11 by the selection unit 13 can be output.

Otherwise, depending on the type of service (for example, e-mail, Internet connection service for mobile telephone, TV phone, etc.) provided by the data string to be transmitted, an identification signal for selection of the first PDU conversion unit 11 and the second PDU conversion unit 12 by the selection unit 13 can be output.

Instead, the SIR (ratio of signal power to interference power) of electromagnetic waves transmitted from the wireless transmission device 10 can be measured by the wireless reception device 20, and an identification signal based on the measurement result fed back to the wireless transmission device 10 can be output. That is, when the value of the SIR is high, and the reception state in the wireless reception device 20 is preferable, an identification signal for selection of the second PDU conversion unit 12 by the selection unit 13 can be output. When the value of the SIR is low, and the reception state in the wireless, reception device 20 is not preferable, an identification signal for selection of the first PDU conversion unit 11 by the selection unit 13 can be output.

Instead, in the reception system of the electromagnetic waves in the wireless reception device 20, for example, when diversity reception is performed, it is expected that a preferable reception state is realized, and an identification signal for selection of the second PDU conversion unit 12 by the selection unit 13 can be output. When diversity reception is not performed, an identification signal for selection of the second PDU conversion unit 12 by the selection unit 13 can be output.

Instead, according to an MCS (modulation code scheme) in the modulation system of a data channel in the information included in the above-mentioned control channel, for example, when the MCS indicates a QPSK, an identification signal for selection of the first PDU conversion unit 11 by the selection unit 13 can be output, and when the MCS indicates a QAM, an identification signal for selection of the second PDU conversion unit 12 by the selection unit 13 can be output.

According to a CQI (channel quality indicator) indicating the reception quality of the data channel in the identification included in the above-mentioned control channel, for example, when the value of the SIR indicated by the CQI is four or more, an identification signal for selection of the second PDU conversion unit 12 by the selection unit 13 can be output, and when it is less than four, the identification signal for selection of the first PDU conversion unit 11 by the selection unit 13 can be output.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A data transmission device (10), comprising:
a first data string conversion unit (11) converting a data string before conversion to a data string of a first data structure;
a second data string conversion unit (12) converting the data string before conversion to a data string of a second data structure different from the first data structure;
a selection unit (13) selecting one of the first data string conversion unit and the second data string conversion unit; and
a transmission unit (15) transmitting the data string obtained by a conversion by what is selected by the selection unit (13), and selection information indicating a selection result by the selection unit (13).

2. The device (10) according to claim 1, wherein
the data string before conversion configures one or more MAC (medium access control) frames.

3. The device (10) according to claim 1 or 2, wherein
the selection unit (13) performs the selection according to the information, included in the data string before conversion about the characteristic of the data string.

4. The device (10) according to any of the preceding claims, wherein
the transmission unit (15) further transfers the control information, provided with the selection information, about a data string to be transmitted by the transmission unit (15).

5. The device (10) according to any of the preceding claims, wherein
the transmission unit (15) transmits the data string provided with the selection information.

6. The device (10) according to claim 5, wherein
the transmission unit (15) transmits the selection information added to a specific position in the data string.

7. The device (10) according to any of the preceding claims, wherein
the transmission unit (15) transmits a data string signal representing a data string transmitted by the transmission unit (15), and transmits a signal different from the data string signal as the selection information.

8. The device (10) according to claim 2 or any claim dependent thereon, wherein
the second data string conversion unit (12) comprises:
a header information generation unit (121) generating header information including: identification information about a MAC frame assigned to the leading MAC frame in the data string before conversion; division number information about dividing a data string with header information, formed by adding the header information to the data string before conversion, from the leading portion for a predetermined data length; and frame length information about each MAC frame configured by the data string before conversion;
a header information attached data string forming unit (122) forming the data string with header information by adding the header information to the data string before conversion; and
a data string division unit (123) dividing the data string with header information for each data length from the leading portion.

9. The device (10) according to claim 8, wherein
the transmission unit (15) transmits the header information, added to the data string with header information, with the selection information added.

10. A data reception device (20), comprising:
a reception unit (21) / receiving from a source a data string after conversion obtained by converting a data string before conversion to a data string of a predetermined data structure, and specific information for designation of the conversion performed to obtain the data string after conversion; and
a data string inverse conversion unit (23) forming a data string before conversion by performing an inverse conversion on the data string after conversion according to the specific information.

11. The device (20) according to claim 10, wherein
the data string before conversion configures one or more MAC (medium access control) frames.

12. The device (20) according to claim 10 or 11, wherein
the reception unit (21) further receives the control information, about the data string after conversion transmitted from the source, provided with the specific information.

13. The device (20) according to claim 10, 11 or 12, wherein
the reception unit (21) receives the data string after conversion provided with the specific information.

14. The device (20) according to claim 13, wherein
the reception unit (21) receives the specific information added to a specific position in the data string after conversion.

15. The device (20) according to any of claims 10 to 14, wherein
the reception unit (21) receives a data string signal representing the data string after conversion transmitted from the source, and a signal different from the after-conversion data string signal transmitted from the source as the specific information.

16. The device (20) according to claim 11 or any claim dependent thereon, wherein
the data string after conversion is obtained by dividing the data string with header information formed by adding to the data string before conversion the header information including: identification information about a MAC frame assigned to the leading MAC frame in the data string before conversion; division number information about dividing a data string with header information, formed by adding the header information to the data string before conversion, from the leading portion for a predetermined data length; and frame length information about each MAC frame configured by the data string before conversion, from the leading portion for each predetermined data length.

17. The device (20) according to claim 16, wherein
the header information added to the data string with header information is provided with the specific information.

18. A data communication method, comprising:
generating header information including data string identification information assigned to a leading data string in a data group formed by arranging one or more predetermined data strings, information about the number of divisions obtained when a data group with header information formed by adding header information to the data group is divided from a leading portion for each predetermined data length, and information about each data length of the data string;
forming the data group with header information by adding the header information to the data group;
generating a communication data string by dividing the data group with header information from the leading portion for each predetermined data length; and
transmitting the communication data string to a destination.

19. The method according to claim 18, wherein
the predetermined data string configures a MAC (medium access control) frame.
